# EUROPEAN PATENT SPECIFICATION

(11) **EP 2 684 625 B1**
(45) Date of publication and mention of the grant of the patent: **05.11.2014**
(21) Application number: 13187819.1
(22) Date of filing: 21.04.2009
(51) Int. Cl.: B21D 51/48, B21D 51/46, B29C 70/80, B29C 31/06, B29C 43/34

(54) **Plant and apparatus for forming objects**
Anlage und Vorrichtung zum Formen von Gegenständen
Installation et appareil pour former des objets

(30) Priority: 22.04.2008 IT MO20080117
(43) Date of publication of application: 15.01.2014
(62) Divisional of application: 09733791.9
(73) Proprietor: SACMI COOPERATIVA MECCANICI IMOLA SOCIETA' COOPERATIVA, 40026 Imola (IT)
(72) Inventor: Villa, Fabrizio, 40026 Imola (BOLOGNA) (IT); Mirri, Marco, 48024 Massalombarda (RA) (IT); Sallioni, Andrea, 40062 Molinella (BOLOGNA) (IT); Bonzi, Ivan, 40026 Imola (BOLOGNA) (IT)
(74) Representative: Villanova, Massimo

(56) References cited:
- EP-A- 0 838 326
- EP-A1- 0 462 513
- WO-A2-2005/039853
- GB-A- 805 022
- US-A- 2 952 035
- US-A- 3 621 530
- US-A- 4 298 320

## Description

The invention relates to an apparatus for forming caps, particularly metal caps such as crown caps, inside which seals are moulded. Manufacturing crown caps by means of presses is known, which presses shape a metal sheet. In the crown caps that are thus obtained a seal is subsequently moulded by compression of a dose of plastics.

The crown caps produced by the press can be stored temporarily inside suitable containers whilst waiting for the seals to be formed. Subsequently, the crown caps are removed and sent to a machine, separated by the press and independently therefrom, that forms a seal in each cap.

This production system creates many drawbacks from the hygiene point of view inasmuch as it entails a high risk of contamination of the crown caps whilst the latter are stored inside the containers. Further, during storage, the caps, and in particular the painted surfaces thereof, can easily be damaged.

Solutions are also known in which two machines for forming the seals inside the crown caps are connected to a single press. Although these solutions are improvements from the hygienic point of view inasmuch as they do not require the caps to be stored at the outlet from the press, they have the drawback of requiring very significant overall dimensions and high energy consumption. Further, it is rather complicated to coordinate the operation of the press and of the two machines for forming the seals, particularly if one of the two machines for forming the seals breaks or has to operate at reduced speed.

The machines known for forming seals inside crown caps comprise a supply channel through which the crown caps are conveyed to a dosing carousel. In the dosing carousel, inside each cap a dose of plastics is deposited that will subsequently be compression-moulded to form a seal.

The dosing carousel comprises a plurality of conveying elements for conveying the crown caps during the rotation of the carousel. The conveying elements are subject to very great stress when they receive the crown caps from the supply channel, because each crown cap violently knocks the conveying element to which it is delivered. This may cause wear, deformation and in some cases even breakage of the conveying elements.

This situation is particularly critical because the material constituting the conveying elements of the dosing carousel cannot be chosen at will. In fact, the dosing carousel is associated with heating devices to heat the caps, usually of electromagnetic induction type. The heating devices are used to activate a lacquer that is usually applied inside the caps so as to improve the adhesion of the seal to the cap and subsequently to maintain the lacquer at the activation temperature thereof.

In order to prevent the electromagnetic induction heating devices overheating the components of the dosing carousel, and in particular the conveying elements, the latter are usually made of plastics, which is a amagnetic material. Nevertheless, the plastics can easily be worn or deformed owing to the great impact forces applied to the conveying elements by the caps coming from the inlet channel.

Similar drawbacks may also occur in the carousels arranged downstream of the dosing carousel that, owing to the presence of electromagnetic induction heating devices, are provided with conveying elements made of plastics.

Further, the conveying elements made of plastics can easily be damaged owing to the great temperatures that the caps reach during electromagnetic induction heating.

The dosing carousel comprises a plurality of separating members, each of which is suitable for separating a dose of plastics from an extruding device arranged along the route of the separating members. The dose removed by each separating member is subsequently released inside an underlying cap.

The extruding device comprises an extruding nozzle inside which a conduit is obtained having a substantially horizontal initial portion followed by a final tilted portion through which the plastics exit from the extruding nozzle. The final portion, which has a very short length, is tilted by a few degrees in relation to the vertical direction towards the body of the extruding device. This conformation enables a substantially vertical extrusion to be obtained at the outlet from the extruding nozzle, because the tilt of the final portion compensates, as it were, for the deformations that the plastics naturally undergo at the outlet of the extruding nozzle, following the elastic return due to the memory of the extruded molecules.

Nevertheless, when the production speed of the apparatus increases beyond a certain limit, the conformation of the extruding nozzle disclosed above not longer enables a substantially vertical extrusion to be obtained, but the plastics exit the extruding nozzle in a configuration that is so deformed that it is no longer possible to obtain doses that can be correctly processed.

Further, for high production speeds, owing to the difference in speed between various points of the plastics inside the extruding nozzle, significant cutting forces are found in the plastics. These cutting forces can cause lacerations to the plastics on the external surface of the dose.

In order to release the dose removed from a separating member in a corresponding cap, it is known to use a jet of pressurised air that detaches the dose from the corresponding separating member. The jet of pressurised air can also be used for rejecting doses of plastics in the event of the absence of a cap in a determined position of the dosing carousel.

The jet of pressurised air reaches each separating member by means of a corresponding conduit obtained in the dosing carousel. A distributor enables each conduit to be placed selectively in communication with a source of compressed air, an electrically operated valve being interposed between the source of compressed air and the distributor. - Known apparatuses have the drawback of not enabling, at high speeds, an effective detachment of the dose from the separating member, particularly if two consecutive doses have to be rejected, which requires two consecutive jets of air with a great flowrate. In fact, at high production speeds, the time that elapses between the rejection of two doses conveyed by two consecutive separating members is very short. This time may not be sufficient for the electrically operated valve to be activated and the pressurised jet to reach the separating member.

The known apparatuses further comprise a forming carousel for compression moulding the doses of plastics inside the corresponding caps so as to obtain the seals. The forming carousel comprises a plurality of forming units, each of which includes a supporting element for supporting a cap and a punch for shaping the seal inside the cap.

The punch, after shaping the plastics in order to obtain the seal, has to remain in contact with the seal for a sufficient period of time to ensure that the shape of the cooling seal stabilises so as to be able to be subsequently handled without undergoing damage. Although in known apparatuses heat-treating the punch by means of a cooling fluid is known, the time that is necessary to the shape of the seal to stabilise is, however, rather long and is not compatible with very high production speeds.

The supporting element is moved by a cam that is designed to move the supporting element to the punch so that the latter can shape the plastics to obtain the seal. At the end of the forming step, a spring moves the supporting element away from the punch so that the cap in which the seal has been formed can be removed and a new cap containing a dose of plastics can be positioned on the supporting element.

The spring that moves the supporting element away from the punch can easily break owing to the fatiguing cycle to which it is subjected. Consequently, in order not to compromise the correct operation of the forming carousel, it is necessary to proceed with frequent maintenance operations in order to replace the spring that moves the supporting element away from the punch before this spring breaks. This causes frequent stops of the apparatus, which entails high maintenance costs and a loss of productivity.

Each supporting element is maintained pushed against the punch with a great force, which is applied both in the initial moments in which the punch shapes the dose of plastics to obtain the seal, and in the subsequent instants in which the cap is maintained in contact with the punch to stabilise the shape of the seal.

This great force significantly stresses the components of the forming carousel and may cause elastic deformations to the structure of the forming carousel. Such elastic deformations have to be avoided as far as possible, inasmuch as they may compromise correct contact between the cap and the punch and thus compromise the quality of the seal.

After the seals have been formed, the caps abandon the forming carousel and are conveyed to the outlet of the apparatus to be subjected to subsequent operations, for example to be arranged inside boxes. As the caps are still hot when they abandon the forming carousel, it is known to use cooling devices arranged downstream of the forming carousel for cooling the caps and the corresponding seals. The cooling devices enable the risks of damage to the seals downstream of the forming carousel to be avoided, for example when the caps are piled inside the boxes, and even avoid the risk unpleasant odours being released by the seals inside the boxes due to the high temperatures.

Known cooling devices comprise forced-convection devices that use air at ambient temperature or cooled air.

If the apparatus that forms the seals inside the caps operates at high speeds, known cooling devices may be incapable of cooling the seals sufficiently.

Further, known cooling devices have the advantage of being rather bulky and the use thereof may make it necessary to extend the path of the caps exiting the forming carousel.

EP 0 462 513 A1 **discloses an apparatus as in the preamble of claim 1.**

An object of the invention is to improve apparatuses for producing objects, particularly seals inside caps made, for example, of metallic material such as crown caps.

Another object is to improve the hygienic conditions of the caps provided with respective seals, during production thereof.

Another object is to reduce the risk of damaging the caps and the corresponding seals during production thereof.

Another object is to reduce the dimensions of the apparatuses to produce caps having seals.

Another object is to simplify the coordination of parts of plants to produce caps provided with seals.

A further object of the invention is to reduce the risks of breaking or deforming of the components of the apparatuses to produce caps having seals, in particular conveying elements of the caps.

Another object is to diminish the wear to the components of the apparatuses for forming seals inside the caps, such components being intended for coming into contact with the caps during conveying thereof.

A further object is to provide apparatuses for obtaining seals inside caps that have an improved extruding device that is able to dispense good-quality doses even at high production speeds.

A further object is to enable two consecutive doses of plastics to be rejected effectively or two consecutive doses to be detached from the corresponding separating members, even at high production speeds.

Another object is to provide apparatuses for producing seals inside caps, in particular crown caps, that are able to operate at high speeds.

Another object is to improve the cooling of the seals formed inside caps, particularly crown caps.

A further object is to provide an apparatus for forming seals inside caps, in which maintenance operations and consequent downtime of the apparatus are reduced. Another object is to optimise the force with which the supporting element of a forming unit pushes the cap into contact with the corresponding punch member.

A further object is to provide an apparatus for producing seals inside caps, in which the caps and the corresponding seals are effectively cooled.

In the invention, an apparatus is provided according to claim 1.

The invention can be better understood and implemented with reference to the attached drawings, which illustrate some embodiments thereof by way of non-limiting example, in which:
Figure 1 is a perspective view of an apparatus for forming seals inside caps, particularly crown caps;
Figure 2 is a perspective view of the apparatus in Figure 1, taken from a side opposite the side from which the view in Figure 1 is taken;
Figure 3 is a plan view of the apparatus in Figures 1 and 2;
Figure 4 is an enlarged perspective view of a portion of the apparatus of Figures 1 to 3;
Figure 5 is a schematic section of a cap having a seal obtained with the apparatus of Figures 1 to 4, according to a first embodiment;
Figure 6 is a schematic section like that in Figure 5, showing a seal according to second embodiment;
Figure 7 is a schematic section like that in Figure 5, showing a seal according to a third embodiment;
Figure 8 is a schematic section like that in Figure 5, showing a seal according to a fourth embodiment;
Figure 9 is a schematic plan view of a plant for producing caps having seals, including the apparatus of Figures 1 to 4;
Figure 10 is a semisection of a dosing carousel included in the apparatus of Figures 1 to 4;
Figure 11 is an enlarged schematic section of a portion of the dosing carousel in Figure 10, showing an extruding device for extruding plastics;
Figure 12 is an enlarged section of an extruding nozzle of the extruding device in Figure 11;
Figure 13 is a graph showing how the speed of the plastics exiting the extruding nozzle in Figure 11 varies along the diameter of this nozzle;
Figure 14 is an enlarged section of a separating device included in the dosing carousel of Figure 10, for separating a dose of plastics from the extruding device of Figure 11;
Figure 15 is a perspective sectioned view of a disc of the dosing carousel in Figure 10;
Figure 16 is a perspective top view of distributing means included in the dosing carousel in Figure 10;
Figure 17 is a perspective bottom view of the distributing means of Figure 16;
Figure 18 is a section view of a conveying element for conveying a cap in which a seal has to be formed;
Figure 19 is a perspective top view of showing three conveying elements like those in Figure 18;
Figure 20 is a perspective bottom view showing the three conveying elements in Figure 19;
Figure 21 is an enlarged section of a forming unit included in a forming carousel of the apparatus of Figures 1 to 4;
Figure 22 shows detail B in Figure 21 on an enlarged scale;
Figure 23 is a perspective view showing cooling means included in a supporting element for supporting a cap in the forming unit in Figure 21;
Figure 24 is a schematic front view of a conveying device to move from the forming units di Figure 21 the caps inside which the seals have been formed;
Figure 25 is an enlarged section showing a cooling device associated with the conveying device in Figure 24;
Figure 26 is a plan view of a portion of the apparatus of Figures 1 to 3, comprising a marking device.

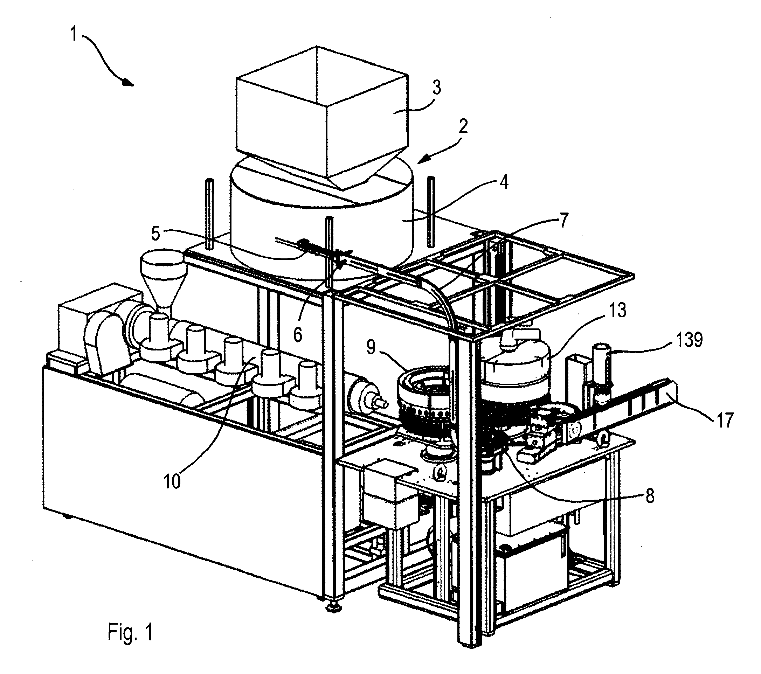

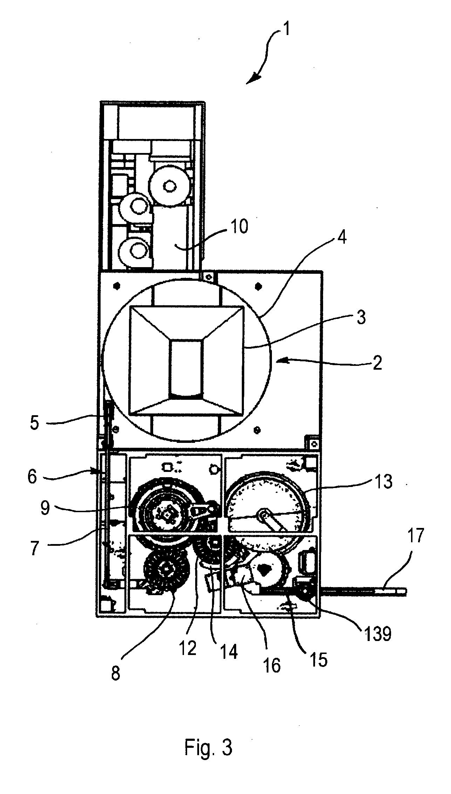

Figures 1 to 3 show a forming apparatus 1 for forming seals inside caps, in particular caps made of metallic material such as crown caps. The seals are formed by compression moulding of a dose of plastics deposited directly inside the cap.

A supplying device 2 is arranged for supplying the caps at the inlet of the forming apparatus 1. The supplying device 2 comprises a hopper 3, inside which caps are positioned loose, the hopper 3 is connected to a drum 4 that, by exploiting, for example, centrifugal force, aligns the caps to form a row. An orientating device 5 is arranged at the outlet of the drum 4 to orientate all the caps in the same manner. The orientating device 5 may comprise a series of propellers that orientate all the caps with the bottom upwards or with the bottom downwards, as desired.

The orientating device 5 is positioned along a supply line 6, suitable for conveying the caps arranged in a single row to successive operating carousels. The supply line 6 may comprise a supply channel 7, arranged, for example, along an "L"-shaped path.

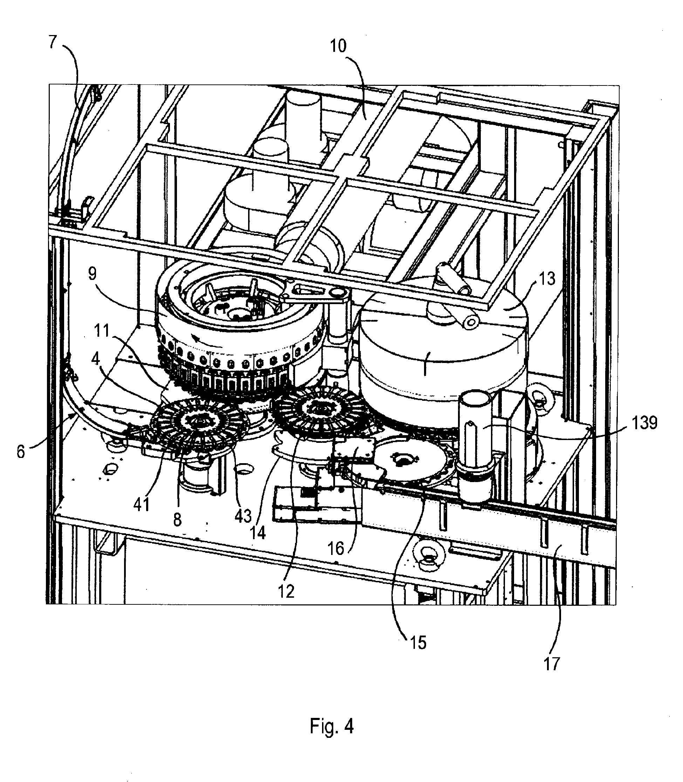

As shown better in Figure 4, the forming apparatus 1 comprises an inlet carousel 8 that receives the caps coming from the supply line 6 and conveys the caps to a conveying device comprising a dosing carousel 9. The dosing carousel 9 conveys the caps on a path along which an extruding device 10 is arranged, suitable for depositing in each cap a dose of plastics from which a seal will be formed. Along the path of the caps borne by the dosing carousel 9, upstream of the extruding device 10, there is further arranged a heating device 11, for example of the electromagnetic induction type, to heat the caps to an activating temperature at which it is possible to activate an adhesion lacquer applied to the internal surface of the caps, on which the seal will have to be formed. The adhesion lacquer, if activated, improves the adhesion of the cap of the plastics constituting the seal. Downstream of the dosing carousel 9 there is arranged a forming carousel 13 for shaping the plastics deposited inside each cap so as to obtain the seal. Between the dosing carousel 9 and the forming carousel 13 there is interposed a transferring carousel 12 for transferring the caps, inside which the doses are deposited, from the dosing carousel 9 to the forming carousel 13. The transferring carousel 12 moves the caps along a path along which a further heating device 14 is arranged. The further heating device 14 is suitable for preventing cooling of the caps and maintaining the lacquer adhering to the corresponding activating temperature.

Downstream of the forming carousel 13 there is arranged an outlet carousel 15, suitable for removing the caps from the forming carousel 13 and conveying the caps to the outlet of the forming apparatus 1. Along the path of the caps conveyed from the outlet carousel 15 quality control devices can be arranged, for example a camera system 16 that enables the quality of the painting to be controlled that is applied to the external surface of an end wall of each cap.

Lastly, downstream of the outlet carousel 15 there is a conveying device 17 to move the caps from the forming apparatus 1. The conveying device 17 may comprise a conveyor belt.

Along the conveying device 17 a quality control device 139 can be positioned to control the quality of the seals formed inside the caps.

The forming apparatus 1 can form seals from a plurality of plastics that are different from one another, for example polyethylene copolymers (LLDPE, LDPE, Metocene), block styrene copolymers, having two-block, three-block or ramified structures (for example S-B-S, S-I-S, S-EB-S), mixtures of polypropylene and EPDM, mixtures of polypropylene and EPR, polypropylene and EPDM vulcanised dynamic products, polypropylene and butyl rubber vulcanised dynamic products, polypropylene and natural rubber vulcanised dynamic products, polypropylene and nitrile rubber vulcanised dynamic products.

The seals produced by the forming apparatus 1 can have a weight comprised between 50 e 500 mg.

The seals produced by the forming apparatus 1 can have many shapes that are different from one another.

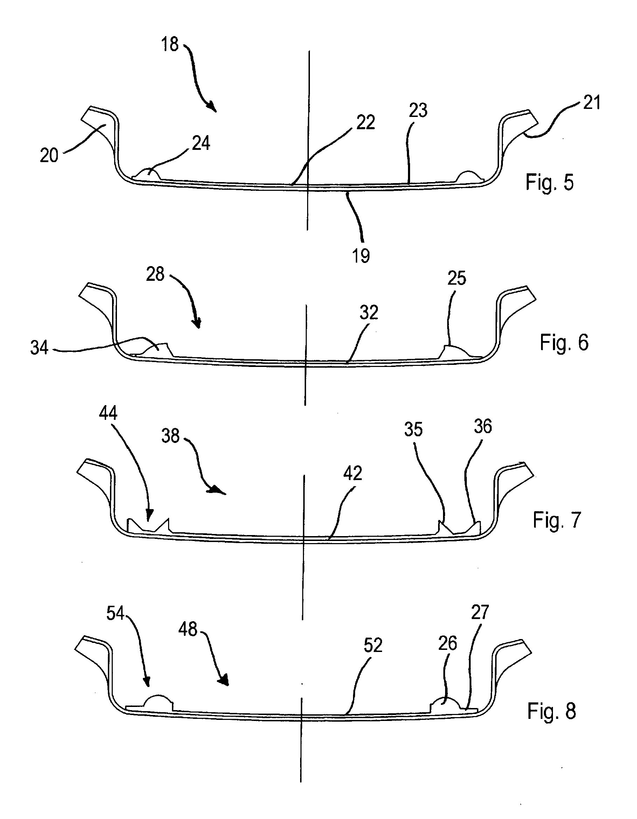

For example, Figure 5 shows a crown cap 18 comprising an end wall 19, having a substantially circular plan shape, from which a side wall or crown 20 projects that is provided with a plurality of corrugations 21. On an internal surface of the end wall 19 a seal 22 is arranged, having a central panel 23 in the form of a full disc and an edge zone 24 that may have an approximately semicircular cross section. The edge zone 24 is suitable for engaging with a rim of a container so as to sealingly close the container. Figure 6 shows a crown cap 28 having a seal 32 according to an alternative embodiment. The seal 32 comprises an edge zone 34 having a lip 25 that projects towards a central region of the crown cap 28.

Figure 7 shows a crown cap 38 according to another alternative embodiment, comprising a seal 42 the edge zone 44 of which is provided within an internal lip 35 and with an external lip 36.

Lastly, Figure 8 shows a crown cap 48 according to further alternative embodiment, comprising a seal 52 having a edge zone 54 including a bead 26, the cross section of which is substantially semicircular. Outside the bead 26 a flat peripheral zone 27 is arranged.

Figures 5 to 8 show only some examples of seals that can be formed by the forming apparatus 1. These seals can be freely selected according to the features of the neck of the container to be closed and of the substance contained in the container. Naturally, the forming apparatus 1 also enables many other seal geometries to be obtained, in particular annular seals devoid of a full central panel.

Owing to the technical solutions that will be disclosed below, the forming apparatus 1 is able to form seals inside the caps at a speed greater than 3500 caps a minute, for example 5000 caps a minute and more.

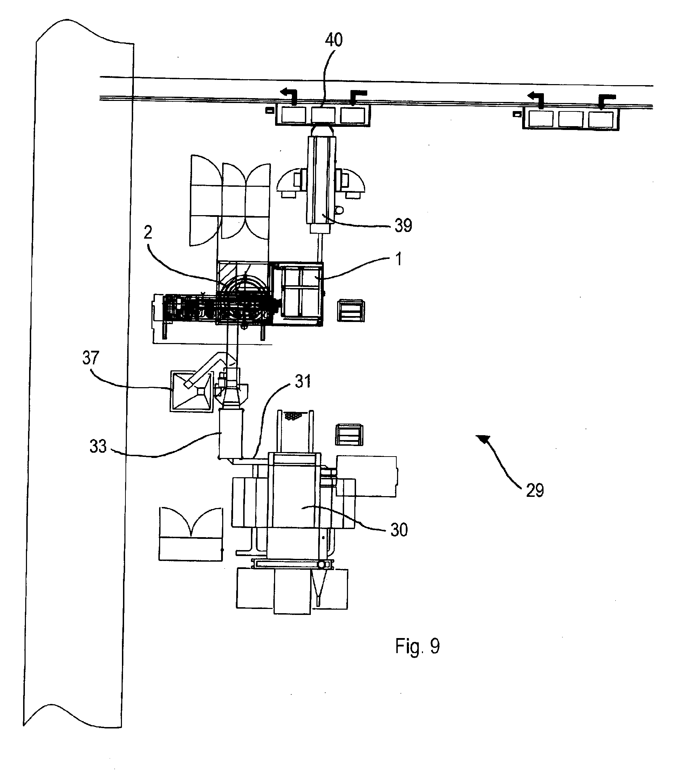

This enables a single forming apparatus 1 to be connected to a press to produce caps, as will be disclosed below with reference to Figure 9.

Figure 9 shows a plant 29 for producing complete crown caps, i.e. provided with seals. The plant 29 comprises a press 30 suitable for forming the metal part of the crown caps, i.e. the end wall and the crown by drawing and shearing of a metal sheet. The press 30 is able to operate at high production speeds, typically greater than 3500 caps a minute, for example in the order of 5000 caps a minute and more.

At the outlet of the press 30 a connecting device 31 is provided for connecting the press 30 to a forming apparatus 1. The connecting device 31 may comprise a conveying system for conveying the caps produced by the press 30 to the forming apparatus 1.

In particular, the caps conveyed by the connecting device 31 can be taken directly inside the supplying device 2 of the forming apparatus 1.

The connecting device 31 is relatively short so as to enable the plant 29 to be very compact. For example, the connecting device 31 can have a length such that, during normal operating conditions, even only 500 caps are supported on the connecting device 31.

The connecting device 31, in addition to connecting the press 30 and the forming apparatus 1, enables the forming apparatus 1 to operate continuously and uniformly even if the caps inside which the seals have to be formed come from a press 30 that operates intermittently, i.e. produces, for each productive cycle, a preset number of caps.

Along the connecting device 31 there may be one or more quality-control systems 33 for detecting and rejecting possible faulty caps produced by the press 1 or possible processing chips.

Along the connecting device 31 there may also be an accumulating device 37 inside which a certain quantity of caps produced by the press 30 can be accumulated to compensate for possible downtime of a machine of the plant 29.

The example of 500 caps cited above to quantify by way of example the length of the connecting device 31 does not take into account the capacity of the accumulating device 37.

Downstream of the forming apparatus 1 there can be a cooling apparatus 39 for cooling the caps inside which the seals have just been formed.

Lastly, in an end portion of the plant 29 there can be a packaging system 40 for packaging the caps inside suitable boxes.

By connecting the forming apparatus 1 directly to the press 30, it is possible to eliminate stockpiles outside the line of the caps in which the seals have to be performed. This enables the risks of contaminating the caps or of damaging the caps during stockpiling to be reduced.

Further, the dimensions of the plant 29 are relatively reduced, like the conveying of the caps between one step and another of the productive cycle. Also energy consumption can be diminished in relation to a press connected to two seal-forming apparatuses.

The main components of the forming apparatus 1 will be disclosed in greater detail below.

As shown in Figure 4, the inlet carousel 8 comprises a circular support 41 having a plurality of retaining elements 43, each of which is able to retain a cap coming from the supply channel 7. The circular support 41 and the retaining elements 43 are made of materials having great resistance and good capacity to absorb shocks, such as not to be damaged owing to the impacts of the caps coming from the supply channel 7. For example, the circular support 41 and the retaining elements 43 can be made of non-fragile metal materials. The use of metal materials is made possible inasmuch as on the inlet carousel 8 there are no electromagnetic induction heating devices. There are thus no risks of overheating of the components of the inlet carousel 8.

The inlet carousel 8 positioned upstream of the dosing carousel 9 enables the stress applied to this last carousel to be reduced inasmuch as it prevents the caps coming from the supply channel 7 impacting violently against the components of the dosing carousel 9. In fact, when the caps are delivered by a linear conveying device, such as the supply channel 7, to a rotary conveying device such as a carousel, rather violent impacts against the carousel occur. Such impacts do not occur when a cap passes from one rotary conveying device to another, i.e. from one carousel to another. The caps are then consigned by the inlet carousel 8 to the dosing carousel 9 in a non-traumatic manner. The inlet carousel 8 further defines a zone of the forming apparatus 1 in which it is possible to install accessory devices, for example control or marking devices, as will be disclosed better below.

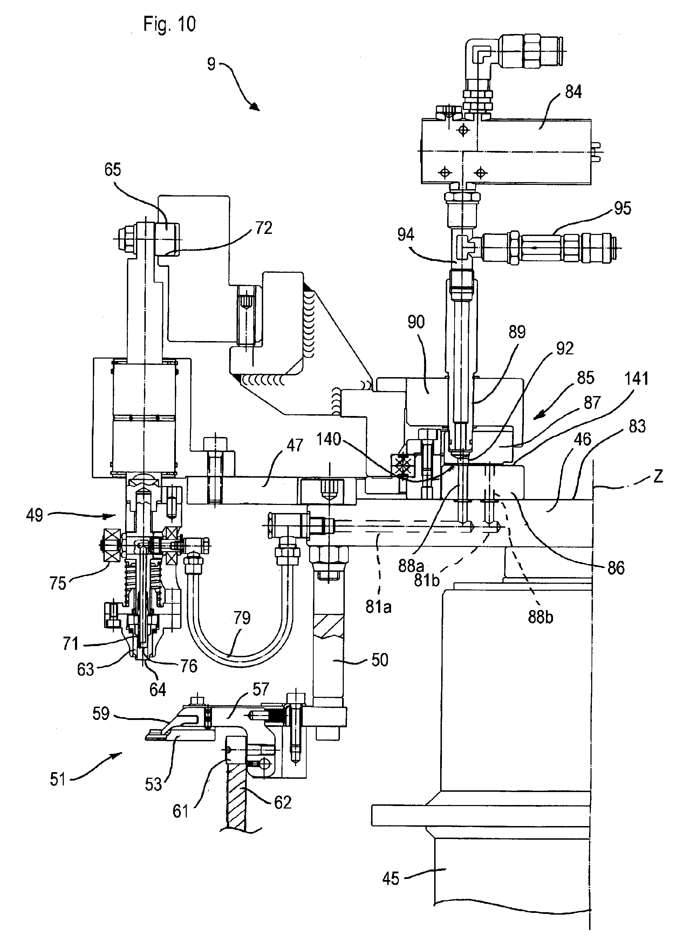

Figure 10 shows a semisection of the dosing carousel 9 included in the forming apparatus 1. The dosing carousel 9 comprises a non-illustrated shaft, which is rotatable inside a sleeve 45 around a rotation axis Z. To an upper end of the shaft 45 a disc 46 is fixed that supports, with the interposition of an annular element 47, a plurality of separating devices 49. Each separating device 49 is suitable for separating a dose of plastics extruded from the extruding device 10 and for delivering the dose to a corresponding cap.

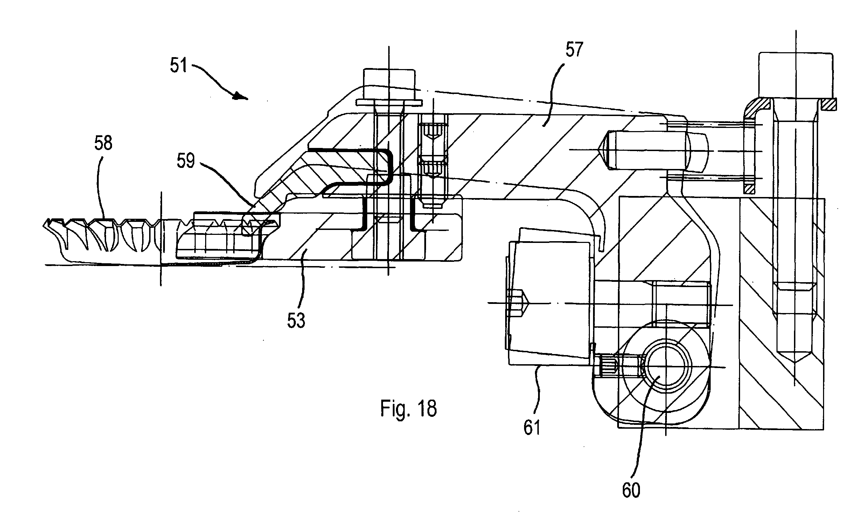

The disc 46 further supports, by means of a vertical wall 50, in a peripheral region thereof, a plurality of conveying elements 51 each of which is suitable for conveying a cap 58, as shown in Figure 18.

Each conveying element 51 is aligned on a corresponding separating device 49. In particular, each conveying element 51 is arranged below the corresponding separating device 49.

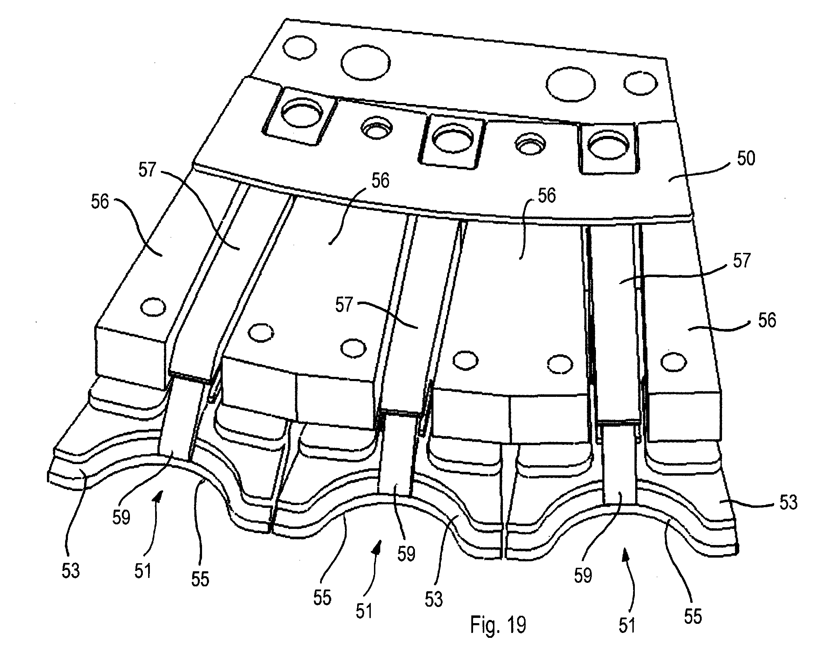

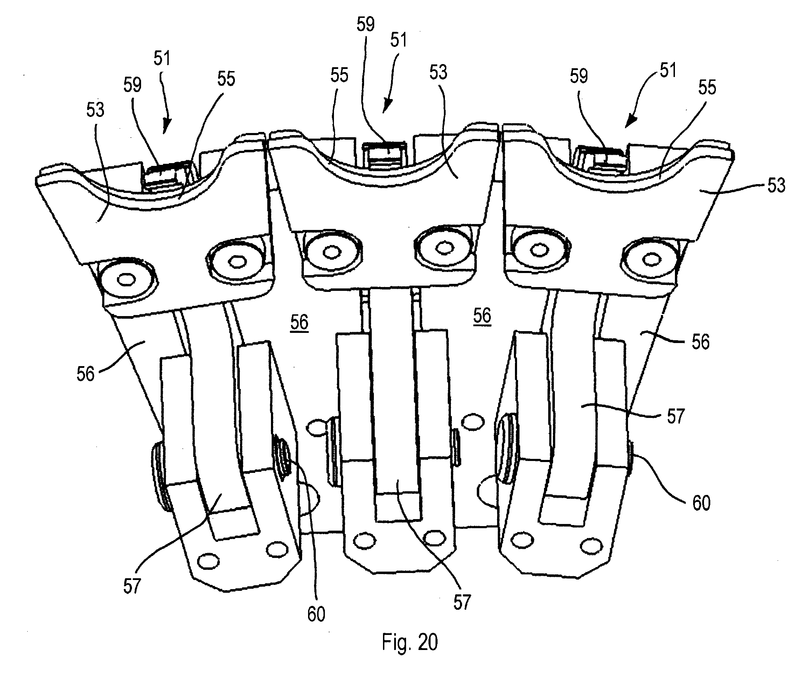

The structure of the conveying elements 51 can be better understood with reference to Figures 18 to 20. Each conveying element 51 comprises a concave member 53, in which a recess is obtained that is bounded by an edge region 55. The edge region 55 has the shape of a circular portion, so as to engage with the side wall of a cap 58. The concave members 53 are fixed to sectors 56, in turn supported by the vertical wall 50. In particular, each concave member 53 has a side zone fixed to a first sector 56 and a further side zone fixed to a sector 56 adjacent to the first.

Between two adjacent sectors 56 a cleft is defined in which a lever 57 is received. To a first end of the lever 57 a gripping member 59 is fixed that may have the shape of a tooth and is suitable for engaging inside the cap 58 to maintain the corresponding side wall in contact with the edge region 55 of the concave member 53.

Into a second end of the lever 57 a pivot 60 is inserted around which the lever 57 can oscillate. In particular, each lever 57 supports a roller 61 suitable for engaging with a stationary cam 62, shown in the lower part of Figure 10.

Owing to the stationary cam 62, the lever 57 can oscillate between a gripping position, shown by a continuous line in Figure 18, and a disengaging position, shown by a dash-dot line in Figure 18. In the gripping position, the gripping member 59 maintains the side wall of the cap 58 pressed against the edge region 55, so as to retain the cap 58 in contact with the concave member 53. In this position the cap 58 is conveyed by the conveying element 51 during rotation of the dosing carousel 9.

In the disengaging position, the gripping member 59 is raised in relation to the edge region 55 and leaves the cap 58 free, which can be moved away from the dosing carousel 9. Further, in the disengaging position, a new cap 58 can be received by the corresponding conveying element 51 to be taken to the extruding device 10.

The concave members 53 are made of ceramic material, as also the grasping members 59. The levers 57 are on the other hand made of amagnetic metallic material, for example austenitic stainless steel or aluminium.

The conveying elements 51 convey the caps 58 from the inlet carousel 8 to the transferring carousel 12. During the journey of the conveying elements 51, the caps 58 interact with the heating device 11, shown in Figure 4, which, as already explained, is generally of the electromagnetic induction type. In particular, the heating device 11 comprises a stationary plate to which copper pipes are fixed outside which high-frequency electric currents circulate that generate an electromagnetic field that, through induction, heats the magnetic material that forms the caps. The conveying elements 51 convey the caps 58 above the plate of the heating device 11 so that the caps 58 are suspended at a distance of a few tenths of a millimetre from the plate.

The ceramic material that forms the concave members 53 and the grasping members 59 is not deformed following contact with the caps 58 heated to a high temperature by the heating device 11. Further, even if the caps 58 apply great force to the conveying elements 51, for example in the case of impacts of the caps 58 against the concave member 53, the ceramic material does not undergo significant deformations. It should be noted in this connection that owing to the inlet carousel 8 that has enabled the dosing carousel 9 to be transferred upstream the drawbacks linked to the great impact forces of the caps coming from the supply channel 7 on the dosing carousel 9 violent impacts are unlikely to occur.

Owing to the absence of deformation, the conveying elements 51 ensure that a constantly constant distance is maintained between the caps 58 and the plate of the heating device 11 during conveying of the caps 58. This enables all the caps 58 to be heated in a uniform manner.

Further, as the conveying elements 51 are not subject to substantial deformation, the distance between the caps 58 and the plate of the heating device 11 can be reduced, which enables the heating efficiency to be increased.

The ceramic material that forms the concave members 53 and the grasping members 59 also enables wear phenomena to be drastically reduced in the conveying elements 51, although the crown caps are highly abrasive. In this manner the duration of the conveying device 51 increases.

Lastly, the grasping members 59 and the concave members 53 made of ceramic material enable phenomena of distortion of the electromagnetic field to be avoided, which makes heating of the caps 58 more uniform.

It is understood that conveying elements 51 of the type disclosed above can also be adopted in other carousels arranged downstream of the dosing carousel 9, particularly if electromagnetic induction heating devices are associated with such carousels. In particular, conveying elements of the type disclosed above can be mounted on the transferring carouse 112.

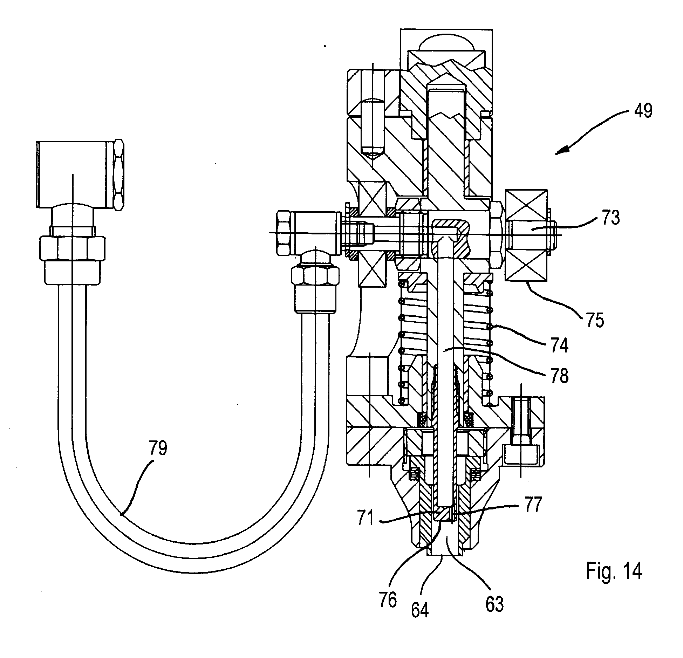

As shown in Figure 14, each separating device 49 comprises a separating member 63 having a cutting surface 64 that is suitable for removing a dose of extruded plastics from the extruding device 10.

The separating member 63 has, at least near the cutting surface 64, the shape of a channel open on one side so as to house a dose exiting the extruding device 10.

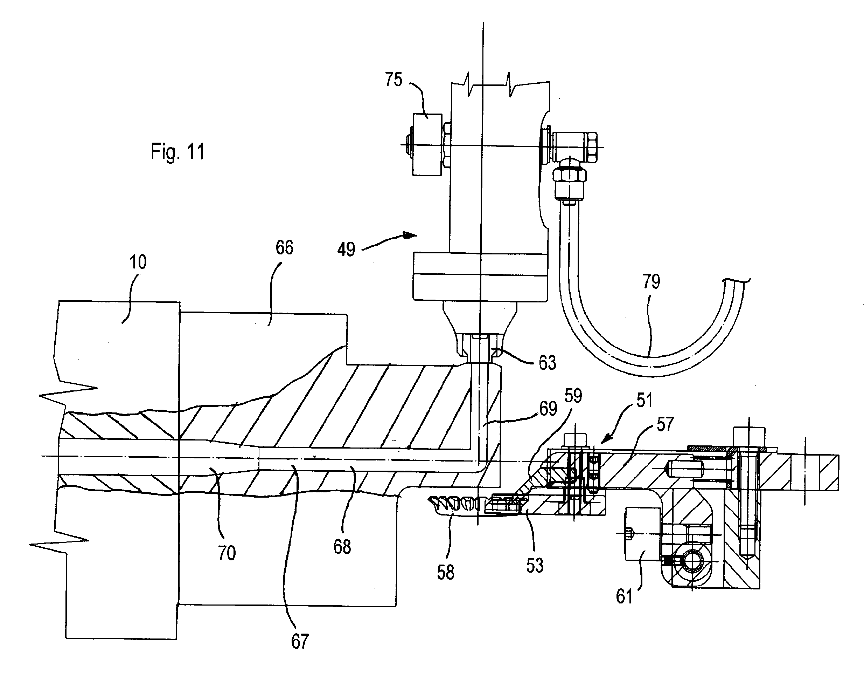

Each separating device 49 can be removed from, or moved towards, the corresponding conveying element 51 owing to movement means comprising, for example, a wheel 65 that can engage with a control cam 72, as shown in the top left part of Figure 10. In this manner, each separating device 49 is movable between a removal position shown in Figure 11 and a release position. In the removal position, the separating device 49 is spaced away from the corresponding conveying element 51 supporting a cap 58, so that between the cap 58 and the separating device 49 there can be interposed an extruding nozzle 66 of the extruding device 10. The separating device 49 can thus remove a dose of plastics leaving the extruding nozzle 66.

In the release position, the separating device 49 is arranged near the underlying conveying element 51, so as to release the dose of plastics into the corresponding cap 58.

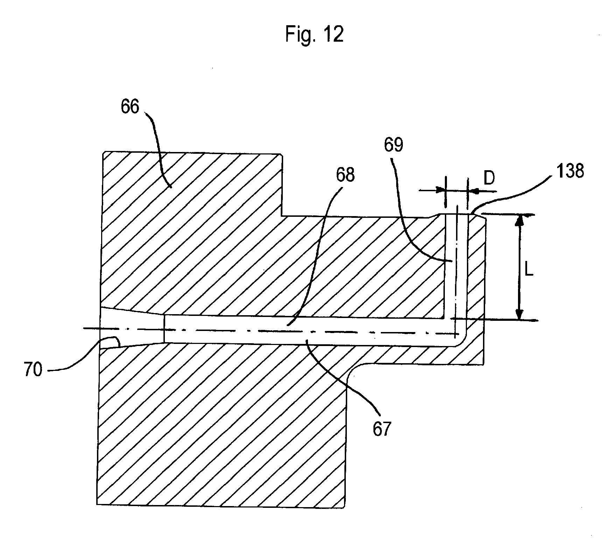

Figure 12 shows the extruding nozzle 66 of the extruding device 10 in detail. The extruding nozzle 66 has an extruding conduit 67 through which the plastics can exit into the external environment. The extruding conduit 67 has an initial portion 68 that can be arranged along a substantially horizontal direction. The initial portion 68 receives the plastics conveyed in a horizontal direction by a screw arranged inside the extruding device 10.

The extruding conduit 67 further comprises, downstream of the initial portion 68, a final portion 69 that extends transversely to the initial portion 68. In particular, the final portion 69 is substantially perpendicular to the initial portion 68. In the illustrated example, the final portion 69 is substantially vertical. The final portion 69 of the extruding conduit 67 can be cylindrical. Also the initial portion 68 can be prevalently cylindrical, although possibly having a frusto-conical inlet zone 70. The final portion 69 leads onto a separating surface 138 of the extruding nozzle 66 from bottom to top. In the illustrated example, the separating surface 138 is substantially horizontal.

The final portion 69 has a length L and a transverse dimension D, that can be the diameter of the final portion 69. As shown in Figure 12, the length L is significantly greater than the diameter D. In particular, the length L is equal at least to twice the diameter D. In the illustrated example, the length L is 26.5 mm, whilst the diameter D is 5.4 mm. This means that the ratio between the length L and the diameter D, in the illustrated example, is greater than 4.

The plastics are suddenly diverted when they pass from the initial portion 68 to the final portion 69 of the extruding conduit 67. This entails a sudden change in the orientation of the molecules that comprise the plastics. By using a final portion 69 having a great length L in relation to the diameter D, the molecules of plastics are given sufficient time to relax after being diverted from the initial portion 68 and to adapt to the new orientation thereof. In this manner, the plastics exit the final portion 69 without undergoing substantial deformation in relation to the direction of the final portion 69. In other words, the plastics, although they are extruded at a high extrusion rate, exit the extruding conduit 67 in a substantially vertical direction, which enables the separating devices 49 to remove the doses of plastics precisely and without difficulty.

The conformation of the extruding conduit 67, and in particular of the final portion 69, further avoids great cutting forces in the plastics exiting the final portion 69, which assures that significant lacerations on the external surface of the dose are not generated.

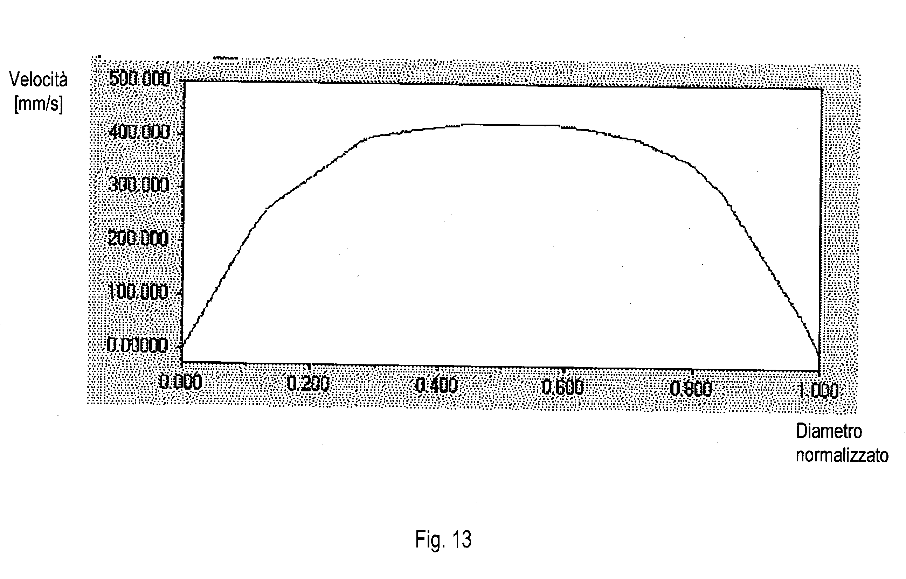

Figure 13 shows how the speed of the plastics exiting the extruding conduit 67 varies along the diameter of the final portion 69. Naturally, the speed of the plastics is very low near the walls of the extruding conduit 67 and is greater at the centre of the extruding conduit 67. It can be observed that the speed of the plastics has a symmetrical pattern in relation to the axis of the extruding conduit 67, which means that the plastics exiting the extruding conduit 67 are maintained parallel to the corresponding axis. In other words, the plastics exiting the extruding conduit 67 do not undergo significant deviations from the vertical direction.

In these conditions, when a separating device 49, in the removal position, passes above the extruding nozzle 66, the cutting surface 64 facing the separating surface 138 separates a dose of plastics from the latter, having a preset mass, exiting the extruding nozzle 66 in the interval between the passage of two consecutive separating devices 49. In particular, the cutting surface 64 scratches the dose of plastics from the extruding nozzle 66. The dose of plastics that is thus formed is received inside the open channel obtained in the separating member 63, to which it adheres through the effect of the sticky consistency of the plastics. The separating member 63 can thus transport the dose during rotation of the dosing carousel 9, above a cap 58 conveyed by the conveying element 51 underneath.

As shown in Figure 14, the separating device 49 comprises a rod 71, having a lower end housed inside the separating member 63. The rod 71 and the separating member 63 are movable in relation to one another between a retracted position, shown in Figure 14 and an extended position that is not shown. In the retracted position, the rod 71 is retracted in relation to the separating member 63 so that inside the separating member 63 the open channel is defined that can receive the dose. In the extended position, the rod 71 occupies at least partially the open channel of the separating member 63 so as to push the dose outside the open channel, so that the dose can be released into the underlying cap 58. The rod 71 thus acts as an ejecting element for detaching the dose from the separating member 63.

In the illustrated example, the rod 71 is moved by a cam that is not shown that acts on a roller member 75. For this purpose, the rod 71 is mounted in a fixed position in relation to a shank 73 that supports the roller member 75.

Each separating device 49 further comprises a coil spring 74 mounted so as to move the separating member 63 away from the rod 71, so that the rod 71 remains in the retracted position if the corresponding cam does not act in an opposite manner.

The dose is detached from the separating member 63 not only owing to the action of the rod 71, but also owing to pneumatic means that may comprise a jet of pressurised fluid, for example compressed air, exiting the rod 71. The pneumatic means, in this case, thus acts as ejecting pneumatic means to enable the separating member 63 to release the dose into the underlying cap 58.

In one embodiment that is not shown, the dose can be detached from the separating member 63 only by means of the pressurised fluid. In other words, the separating member 63 releases the dose only thanks to a pneumatic ejecting means. In this case, the rod 71, if current, is fixed in relation to the separating member 63.

Each separating device 49 can also be provided with rejecting means that is activatable to reject possible doses that cannot be processed. The forming apparatus 1 comprises sensor means arranged near the dosing carousel 9 to check whether all the conveying elements 51 have received a cap 58 from the inlet carousel 8. If the sensor means detect that a conveying element 51 has not received any cap, the dose removed from the corresponding separating device 49 has to be rejected.

The rejecting means can be of pneumatic type, i.e. may comprise a jet of pressurised fluid, for example compressed air that, in a preset position of the dosing carousel 9, detaches the dose from the separating member 63 such that the dose falls into an underlying collecting device.

The manner in which the pressurised fluid is sent to the separating devices 49 to deliver the doses to the underlying caps or to reject the doses in the event of an absence of the caps will be disclosed with reference to Figures 10, 15, 16 and 17.

At an end surface 76 of the rod 71 there is, a hole 77 through which the pressurised fluid can pass. The hole 77 is in communication with a passage 78 obtained inside the rod 71. The passage 78 receives the pressurised fluid from a flexible conduit 79.

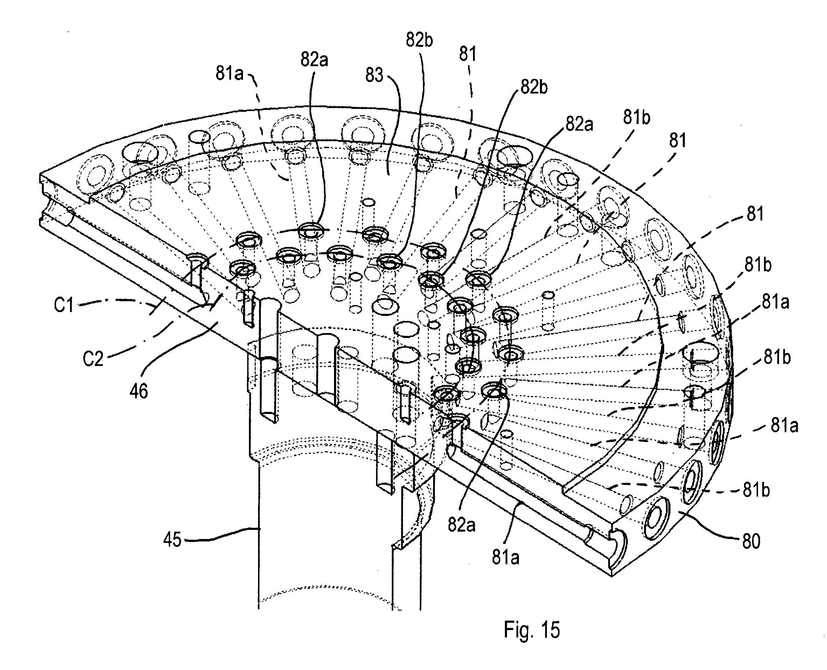

Figure 15 shows the disc 46 positioned above the sleeve 45. In the thickness of the disc 46 a plurality of conduits 81 is obtained that, in the illustrated example, are substantially radial. The conduits 81 have respective external ends leading onto an external circular surface 80 of the disc 46, to which the flexible conduits 79 can be fixed by suitable connections. The conduits 81 can be divided into a first group of conduits 81a and a second group of conduits 81b.

The conduits 81a of the first group are shorter than the conduits 81b of the second group. In fact, the conduits 81a of the first group have respective internal ends 82a leading onto an upper surface 83 of the disc 46 along a circumference C1, whilst the conduits 81b of the second group have respective internal ends 82b leading onto the upper surface 83 along a further circumference C2. The circumference C1 is arranged outside the further circumference C2, i.e. has a greater radius of the further circumference C2.

The conduits 81a of the first group and the conduits 81b of the second group can be angularly distributed in an alternating manner, i.e. a conduit 81a of the first group is interposed between two conduits 81b of the second group and vice versa.

The dosing carousel 9 further comprises a spacing element 86, having, for example, the shape of a ring fixed to the disc 46 and therefore being rotatable around the rotation axis Z. The spacing element 86 and the disc 46 thus form a rotatable body of the dosing carousel 9. The spacing element 86 can be made with a hard material, for example hardened steel.

As shown in Figure 10, in the spacing element 86 a plurality of through holes are obtained that extend through the thickness of the spacing element 86. These through holes comprise first through holes 88a that communicate with the first conduits 81a, and second through holes 88b, that communicate with the second conduits 81b. The first through holes 88a and second through holes 88b lead onto a contact surface 141 of the spacing element 86. In particular, the first through holes 88a lead onto the contact surface 141 along a first circumference having a radius that is equal to the radius of the circumference C1, whilst the second through holes 88b lead onto the contact surface 141 along a second circumference having a radius equal to the radius of the further circumference C2.

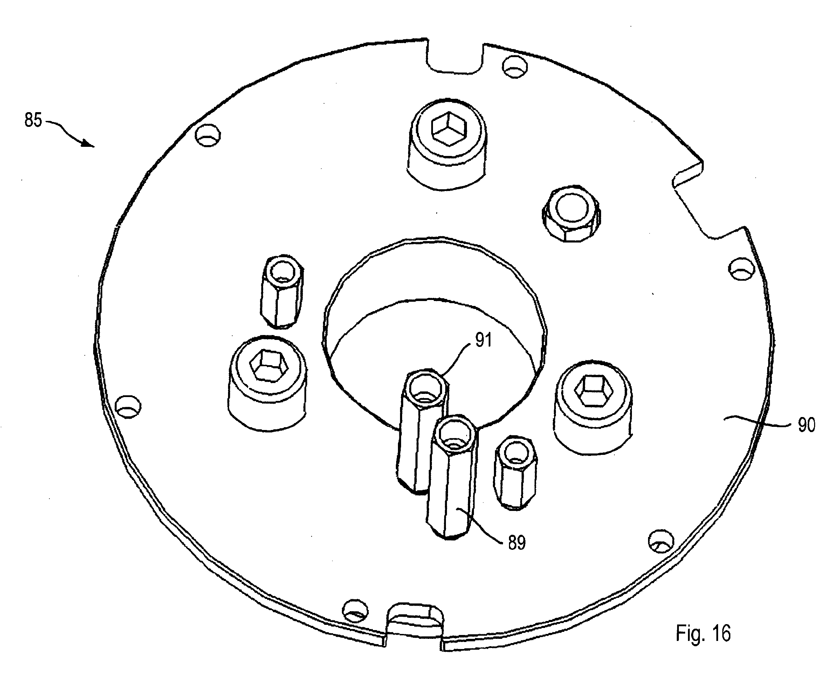

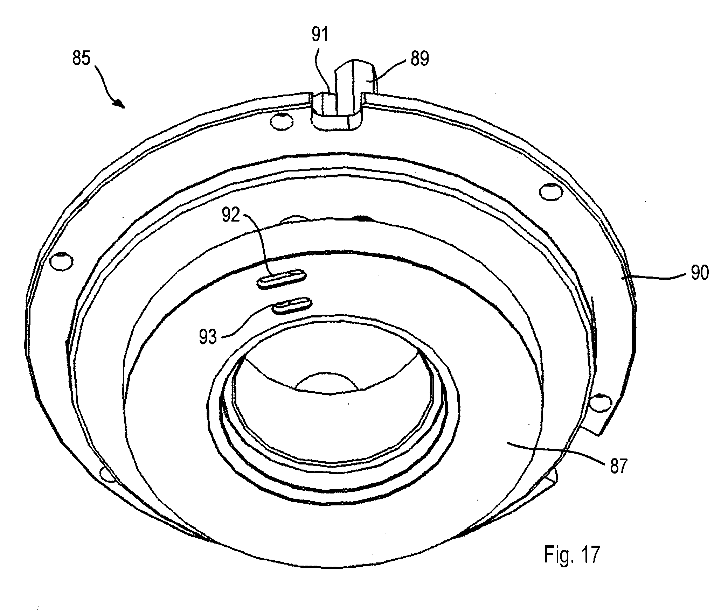

The dosing carousel 9 further comprises distributing means 85, shown in Figures 16 and 17, arranged for sending, when desired, the pressurised fluid into the conduits 81a of the first group and into the conduits 81b of the second group. The distributing means 85 and the rotatable body of the dosing carousel 9 are mutually movable. In the illustrated example, the rotatable body of the dosing carousel 9, comprising the disc 46 and the spacing element 86 rotates around the rotation axis Z, whilst the distributing means 85 is arranged in a stationary position.

The distributing means 85 comprises a distributing element 87 that, as shown in Figure 17, has a first slot 92 and a second slot 93, that pass through the thickness of the distributing element 87. The first slot 92 is obtained at a radial distance from the rotation axis Z that is the same as the radius of the circumference C1. Similarly, the second slot 93 is obtained as a radial distance from the rotation axis Z that is the same as the radius of the further circumference C2.

Above the distributing element 87 an annular support 90 is arranged that supports a first pneumatic connector 89 and a second pneumatic connector 90. The first pneumatic connector 89 leads at the first slot 92, whilst the second pneumatic connector 91 leads at the second slot 93.

The distributing element 87 and the annular support 90 are fixed in relation to one another.

The distributing means 85 is pressed against the spacing element 86 by springs that are not shown. Between the distributing element 87 and the contact surface 141 a wear material 140 is interposed, which is fixed with respect to the distributing element 87.

As shown in Figure 10, to the first pneumatic connector 89 a first pipe 94 is connected that, by means of a first connection 95, communicates with a first source of pressurised fluid. Similarly, to the second pneumatic connector 91 a second pipe that is not shown is connected that, by means of a second connection, communicates with a second source of pressurised fluid. The first source of pressurised fluid and the second source of pressurised fluid can be sources of compressed air.

The pressurised fluids coming from the first source and from the second source have such a pressure as to enable the dose to be separated from the separating member 63 so that the dose falls into the underlying cap 58.

In one alternative embodiment, the pressurised fluid for detaching the doses from the separating members 63 can come from a single tank of pressurised fluid connected to the first pipe 94 and to the second pipe.

The first pipe 94 further communicates with a first electrically operated valve 84 interposed between the first pipe 94 and a further first source of pressurised fluid. Similarly, with the second pipe a second electrically operated valve is associated that is arranged downstream of a further source of pressurised fluid. The pressurised fluids coming from the further first source and from the further second source, which may include compressed air, have pressure greater than the pressurised fluids coming from the first source and from the second source and give rise to more powerful jets used to reject the doses in the event of an absence of the corresponding caps.

In particular, the first electrically operated valve 84 enables the pressurised fluid to be sent to the conduits 81a of the first group, which pressurised fluid enables the doses to be rejected when this is necessary. Similarly, the second electrically operated valve enables the corresponding pressurised fluid to be sent selectively to the conduits 81b of the second group to reject the corresponding doses.

In an alternative embodiment, it is also possible that the first electrically operated valve 84 and the second electrically operated valve are connected to a single tank of pressurised fluid that supplies both the conduits 81a of the first group and those of the second group. When the disc 46 and the spacing element 86 rotate, as the distributing means 85 are arranged in a fixed position, the first slot 92 faces, in sequence, the first through holes 88a communicating with the conduits 81a of the first group of conduits. Similarly, during rotation of the disc 46 and of the spacing element 86, the second slot 93 faces, in successive instants, the second through holes 88b communicating with the conduits 81b of the second group of conduits.

When the first slot 92 faces a first through hole 88a, the corresponding conduit 81a of the first group is connected, through the first pneumatic connector 89, the first pipe 94 and the first connection 95, to the first source of pressurised fluid. A jet of pressurised fluid coming from the first source thus passes through the conduit 81 of the first group and reaches the corresponding separating device 49. Here, the jet of pressurised fluid detaches the dose from the separating member 63. The dose thus falls into an underlying cap, possibly assisted by the rod 71.

When the first slot 92 faces a first through hole 88a, the corresponding conduit 81a of the first group is also connected to the first electrically operated valve 84. If the absence of the cap at the conveying element 51 that corresponds to the conduit 81a has been detected, the first electrically operated valve 84 is opened, so as to make the conduit 81a communicate with the further first source of pressurised fluid. In this manner, through the conduit 81a, a jet of high-pressure fluid reaches the separating device that enables the corresponding dose to be rejected, which dose is ejected into the collecting device.

A similar situation occurs when the second slot 93 faces a conduit 81b of the second group of conduits, in which case the conduit 81b is in communication with the second source of pressurised fluid, which enables the dose to be delivered that is conveyed from the corresponding separating device 49 to the underlying cap 58.

If it is desired to reject the dose found in the separating device 49 connected to a conduit 81b of the second group, the second electrically operated valve is opened when the conduit 81b is in communication with the second slot 93. The conduit 81b is thus made to communicate with the further second source of pressurised fluid, from which a jet of high-pressure fluid originates that rejects the dose conveyed from the separating device 49.

The first slot 92 thus acts as a first communication means to connect selectively the conduits 81a of the first group to the first source of pressurised fluid and, if requested, to the further first source of pressurised fluid. Similarly, the second slot 93 acts as a second communication means to connect selectively the conduits 81b of the second group to the second source of pressurised fluid and to the further second source of pressurised fluid.

The first slot 92 and the second slot 93 extend along a sector of the distributing element 87 that may have a maximum angular dimension corresponding to two operating cycles of the dosing carousel 9. In other words, during rotation of the disc 46 and of the spacing element 86, the first slot 92 can remain in communication with a conduit 81a of the first group for a period that corresponds at most to the time required to deposit two doses of plastics inside two successive caps 58.

During operation, a conveying element 51 receives a cap 58 from the inlet carousel 8. The cap 58 is heated by the heating device 11, after which it reaches the extruding device 10. In this position, the separating device 49 arranged above the cap 58 removes from the extruding nozzle 66 a dose of plastics, which is received in the open channel of the corresponding separating member 63. The separating device 49 that removes the dose then moves away from the extruding device 10, together with the corresponding cap 58 conveyed by the conveying element 51.

It is supposed that the separating device 49 is connected to a conduit 81a of the first group of conduits.

In order to release the dose in the underlying cap 58, the control cam 72 takes the separating device 49 near the cap 58. Simultaneously, during rotation of the disc 46 and of the spacing element 86, the first through hole 88a associated with the separating device 49 faces the first slot 92. The latter makes the through hole 88a communicate with the first source of pressurised fluid. The pressurised fluid is then sent into the passage 78 of the separating device 49, through the corresponding conduit 81a, together with the thrust exerted by the rod 71 that is lowered by the corresponding cam, detaches the dose from the separating member 63 and drops the dose into the underlying cap 58.

If it is desired to reject the corresponding dose because the sensor means has detected the absence of the cap 58, the first electrically operated valve 84 is opened whilst the first slot 92 faces the first through hole 88a. The corresponding separating device 49 is thus made to communicate with the further first source of pressurised fluid, so that the jet of pressurised fluid coming therefrom can eject the dose.

The dose conveyed from the immediately successive separating device 49 is detached from the corresponding separating member 63 by means of a jet of pressurised fluid pass through the second through hole 88b and the conduit 81b of the second group of conduits that is associated with the separating device 49 in question. The second through hole 88b, reaching a position facing the second slot 93, is made to communicate with the second source of pressurised fluid, from which the jet comes that will detach the dose from the separating member 49.

If it is desired to reject this dose too, the second electrically operated valve is opened to make the further second source of pressurised fluid communicate, through the second slot 93, with the second through hole 88b and the conduit 81b. In this manner the jet of pressurised fluid is sent to the separating device 49, which rejects the dose to deliver the dose to the collecting device.

The structure of the distributing means 85 disclosed above enables the time to be increased that is available for sending to each separating device 49 the pressurised fluid that detaches the dose. In fact, the pressurised fluids acting on two consecutive doses come from two independent circuits, the first of which comprises the conduits 81a of the first group, the first through holes 88a, the first slot 92, the first pneumatic connector 89, the first pipe 94, the first connection 95, the first source of pressurised fluid, the first electrically operated valve 84 and the further first source of pressurised fluid.

The second circuit instead comprises the conduits 81b of the second group, the second through holes 88b, the second slot 93, the second pneumatic connector, the second pipe, the second connection, the second source of pressurised fluid, the second electrically operated valve and the further second source of pressurised fluid.

Each circuit has at its disposition a time that can also be equal to two operating cycles to detach a dose from the separating member 63, which enables the doses to be detached without difficulty and also enables two consecutive doses to be rejected without drawbacks even if the production speed is very high.

It should be noted that the components used for making the circuits, and in particular the electrically operated valves, can be standard components that are easily found on the market at non-excessive costs.

In one embodiment that is not shown, for example if the doses are delivered to the underlying caps only through the effect of the pneumatic means, i.e. without the action of the rod 71, it is possible to make two series of slots on the distributing element 87. The first series of slots enables the separating devices 49 to communicate with the sources of pressurised fluid from which the fluid originates that normally detaches the doses whilst the second series of slots enables the separating devices 49 to communicate with the sources of pressurised fluid from which the rejecting fluid comes. This enables the instants to be made totally independent in which the various jets of pressurised fluid are sent to a separating device 49.

The conformation of the conduits 81, of the distributing means 85 and of the pneumatic devices connected thereto, can used not only when a pressurised fluid needs to be sent to a plurality of operating units such as the separating devices 49, but also in combination with a depressurized fluid, for example if it is desired to make control systems that use the vacuum, aspiration conveying systems and other systems.

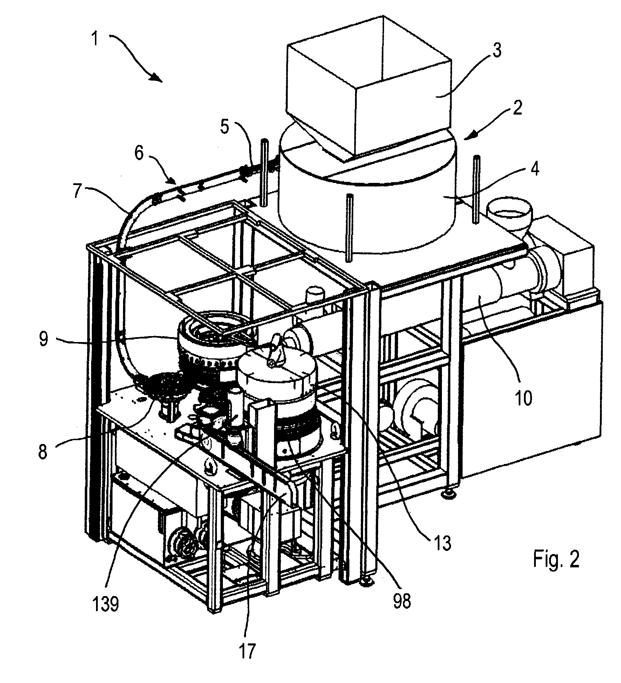

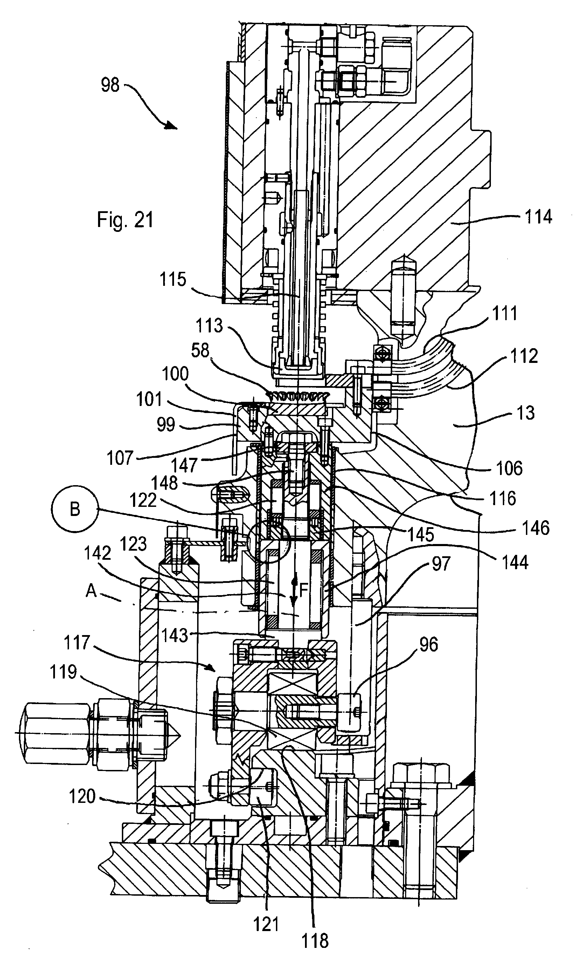

Figure 21 shows a forming unit 98 included in the forming carousel 13 and arranged for shaping the dose of plastics previously deposited in the cap 58 so as to obtain a seal. As shown in Figure 2, the forming carousel 13 comprises a plurality of forming units 98 arranged in a peripheral region thereof.

Each forming units comprises a punch member 113, of known type, suitable for shaping the dose inside the cap 58 so as to obtain the seal. The punch member 113 is mounted on an upper plate 114 of the forming carousel 13. Inside the punch member 113 a cooling system 115 is further obtained comprising a plurality of passages through which a cooling fluid, for example water, can flow. The cooling system 115 enables the punch member 113 to be cooled whilst the latter is in contact with the plastics to obtain the seal. This enables initial cooling of the seal to be obtained and the shape thereof to be stabilised. Each forming units 98 comprises a supporting element 99 for supporting a cap 58 that has been transferred to the forming units 98 from the transferring carousel 12. The supporting element 99 is arranged below the punch member 113, with which it is aligned. Both the supporting element 99 and the punch member 113 are rotated by the body of the forming carousel 13.

The supporting element 99 comprises retaining means for retaining the cap 58, so that the latter does not move in relation to the supporting element 99 during rotation of the forming carousel 13. In the illustrated example, the retaining means comprises a pad 100 housed in a seat 104 of the supporting element 99 and made of magnetic material, which retains the cap 58, made of metallic material, through the effect of a magnetic force.

In one alternative embodiment, the retaining means can be of a different type from the pad 100 and can, for example, comprise suction means.

The supporting element 99 further comprises a protective element 101 that covers the upper and side surface thereof.

The supporting element 99 has a first end surface 106 arranged near the body of the forming carousel 13 and a second end surface 107 opposite the first end surface 106. The supporting element 99 can be L-shaped.

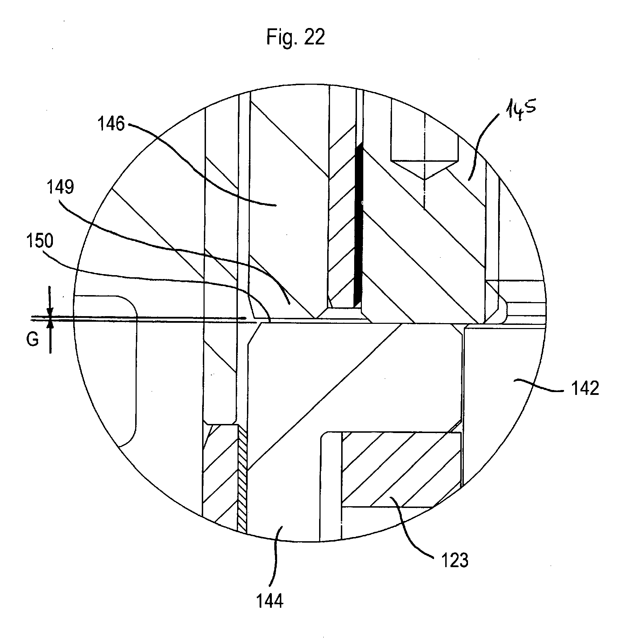

The supporting element 99 also comprises thermal conditioning means 102 shown in Figure 22 and arranged for thermally conditioning the cap 58 and the seal formed therein, i.e. to regulate the heat of the cap 58.

In the embodiment shown, the thermal conditioning means 102 comprises cooling means for cooling the cap 58 and the seal formed therein. Nevertheless, it cannot be excluded that, in particular conditions, the thermal conditioning means may comprise heating means for supplying heat to the cap 58.

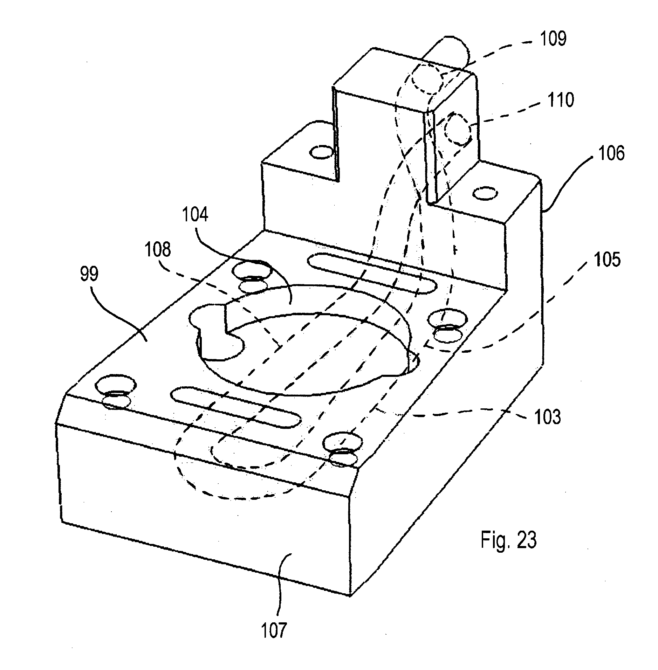

As shown in Figure 23, the thermal conditioning means 102 comprises a cooling circuit obtained inside the supporting element 99, in which a cooling fluid can circulate, for example water. The cooling circuit comprises a cooling conduit 103 obtained in the thickness of the supporting element 99 near the seat 104, for example below the seat 104. The cooling conduit 103 may comprise a first branch 105 that extends from the first end surface 106 to the second end surface 107 and a second branch 108 that from the second end surface 107 returns back to the first end surface 106. In other words, the cooling conduit 103 can be U-shaped.

On the first end surface 106 an inlet hole 109 and an outlet hole 110 are obtained. The first branch 105 of the cooling conduit 103 extends from the inlet hole 109, whilst the second branch 106 leads into the outlet hole 110. With the inlet hole 109 there is associated an inlet conduit 111, shown in Figure 21, that takes the cooling fluid inside the supporting element 99, whilst an outlet conduit 112 is associated with the outlet hole 110, which removes the cooling fluid from the supporting element 99.

The cooling conduit 103 enables the supporting element 99 and thus cap 58 resting on the pad 100 to be cooled effectively. As the cap 58 is made of a metallic material and thus has high heat conductivity, the seal formed inside the cap 58 rapidly yields heat to the supporting element 99.

By combining the cooling system 115 of the punch member 113 and the cooling conduit 103 of the supporting element 99, it is possible rapidly to lower the temperature of the seal, to a point in which the seal can be disengaged from the punch member 113 without risks of damage. This enables the production speed of the forming apparatus 1 to be increased.

In order to ensure that, before forming the seal, the adhesive lacquer on the cap 58 remains at the activation temperature despite the cooling conduit 103 cooling the cap 58, it is possible to adopt one of the following solutions.

According to a first solution, shutting means is provided for shutting the flow of cooling fluid during the period in which the cap 58 rests on the supporting member 99. In practice, whilst the cap 58 is conveyed by the supporting member 99 and before the dose of plastics is compression-moulded, inside the cooling conduit 103 a flow of cooling fluid is sent that has a flowrate that is less than the flowrate sent after the plastics have interacted with the punch member 113.

In a second solution, and according to the invention, with the supporting element temporary supporting means is provided to maintain the cap 58 in a raised position in relation to the supporting element 99 until the start of the compression-moulding step, so as to prevent the contact between the supporting element 99 and the cap 58 before such a step.

In a third solution, surface heating means is provided to increase slightly the temperature of the surface portion of the supporting element 99 before the compression-moulding step, so as to maintain the cap and the corresponding lacquer hot. The surface heating means may comprise high-frequency magnetic induction heating means, hot-air generating means or other means.

Naturally, it is also possible to combine two or more of the three solutions indicated above.

The supporting element 99 is fixed to a column 116 that is moved in a direction F by a cam device 117. In particular, the cam device 117 enables the supporting element 99 to be moved near the punch member 113, so as to bring the cap 58 into contact with the punch member 113 for shaping the dose of plastics. After the seal has been formed, the cam device 117 further enables the supporting element 99 to be moved away from the punch member 113 so as to remove the cap 58.

The cam device 117 comprises a first track 118 in which a first cam follower 119 engages, having, for example, the shape of a roller. The first track 118 is active when the supporting element 99 has to be moved towards the punch member 113, i.e. it ensures that the supporting element 99 rises towards the punch member 113, following a preset law of motion.

The cam device 117 further comprises a second track 120 in which a second cam follower 121 engages, for example a further roller. The second track 120 is active when the supporting element 99 has to be moved away from the punch member 113 to disengage the cap 58 in which the seal has been formed. Owing to the second track 120, the supporting element 99 moves in a controlled manner according to a preset law of motion even when it moves away from the punch member 113.

The cam device 117 thus acts as a desmodromic devices that actively controls the position of the supporting element 99 both during ascent and descent. This enables the precision to be increased with which the supporting element 99 is moved and the use of springs to move the supporting element 99 from the punch member 113 to be avoided. The durability of the device that moves the supporting element 99 is thus increased.

The cam device 117 further comprises an antirotation wheel 96 that engages in a space defined between two stems 97 to prevent the supporting element 99 from rotating in relation to the body of the forming carousel 13.

Inside the column 116 there is positioned elastic means arranged for maintaining the supporting element 99, and thus the cap 58, pressed against the punch member 113 whilst the dose of plastics is compression-moulded. The elastic means comprises first elastic means that can include a first spring 122 and second elastic means that may include a second spring 123. The first spring 122 and the second spring 123 are arranged in sequence along a longitudinal axis A of the column 116. In particular, the first spring 122 and the second spring 123 are arranged around a central pivot 142 extending inside the column 116.

The second spring 123 has a lower end abutting on a shoulder 143 obtained on the central pivot 142. An upper end of the second spring 123 abuts on a containing body 144 inside which is arranged the second spring 123. The containing body 144 is configured as a sort of upturned glass.

A lock nut 145 is screwed onto an intermediate portion of the central pivot 142. The lock nut 145 acts on the containing body 144 so as to preload the second spring 123.

The first spring 122 has a lower end abutting against the locknut 145. An upper end of the first spring 122 abuts on a containing element 146, that surrounds also peripherally the first spring 122. The containing element 146 is fixed to the supporting element 99.

The containing body 144 and the containing element 146 are arranged in sequence along the longitudinal axis A. In particular, as shown in Figure 22, the containing element 146 has an end 149 positioned near an abutting surface 150 of the containing body 144.

A spacer 147 is fixed to the central pivot 142 by means of a screw 148.

In rest conditions, i.e. when the supporting element 99 and the possible cap 58 supported thereby are spaced away from the punch member 113, the first spring 122 tends to move the containing element 146 away from the lock nut 145. The second spring 123 applies a tractive force to the central pivot 142. In these conditions, as shown in Figure 22, between the containing element 146 and the containing body 144 a clearance G is defined. In particular, the clearance G is defined between the abutting surface 150 of the containing body 144 and the end 149 of the containing element 146. The clearance G can be of the order of a few tenths of a millimetre.

When the cam device 117 moves the supporting element 99, supporting the cap 58, to the punch member 113, the clearance G remains unaltered until the moment in which the cap 58 comes to abut against the punch member 113. When the cap 58 comes to abut against the punch member 113, the punch member 113 tends to compress the elastic means arranged inside the column 116.

In particular, the punch member 113 applies a force directed downwards on the supporting element 99, to which the containing element 146 is fixed. In an initial step, as the lock nut 145 remains stationary in relation to the central pivot 142, the first spring 122 shortens and the containing body 144, driven by the cam device 117, moves upwards. When the containing body 144 has moved by a quantity equal to the clearance G, the end 149 comes to abut against the abutting surface 150. From this moment, the containing element 146 acts as if it were integral with the containing body 144. This means that the force applied by the punch member 113 also compresses the second spring 123.

The cam device 117 is shaped in such a way that, whilst the plastics constituting the dose are shaped for forming the seal between the cap 58 and the punch member 113 arranged in contact with the cap 58, both the first spring 122 and the second spring 123 apply to the supporting element 99 respective forces that push the supporting element 99 to the punch member 113. This occurs because the tracks of the cam device 117 are designed such that, in the initial instants of the compression, the containing body 144 is in contact with the containing element 146, so that the first spring 122 and the second spring 123 are both compressed by the forces that extend between the punch member 113 and the supporting element 99.

In this step, the first spring 122 and the second spring 123 thus apply to the punch member 113 a force that is overall great, that is opposed to the force with which the plastics would tend to separate the cap 58 from the punch member 113 during compression.

Subsequently, when the seal has already been formed and the cap 58 is maintained in contact with the punch member 113 only to stabilise the shape of the seal, permitting an initial cooling thereof, the cam device 117 deactivates the second spring 123. This occurs because the cam device 117 moves downwards the central pivot 142 and also lock nut 145 and the containing body 144. In this manner, the containing body 144 moves away from the containing element 146 and the clearance G is restored.

In these conditions, only the first spring 122 pushes the supporting element 99 against the punch member 113. The force applied to the punch member 113 by the supporting element 99 is thus significantly reduced. It should be known that in this step, as the plastics have already been shaped to obtain the seal, excessive force is not required to maintain the mould in the closed position. The first spring 122 is thus able, alone, to apply the required force.

By deactivating the second spring 123 when it is no longer necessary to apply a great force to the supporting element 99, it is possible to limit great stress to the components of the forming carousel 13, which enables structural deformations to be reduced.

During operation, the transferring carousel 12 delivers a cap 58, having a dose of plastics, to a supporting element 99 of the forming carousel 13. Whilst the forming carousel 13 rotates the supporting element 99, the cam device 117 moves the supporting element 99 to the punch member 113, up to a point in which the cap 58 contacts the punch member 133. The dose of plastics deposited previously in the cap 58 is thus shaped to form the seal. In this step, the cam device 117 ensures that both the first spring 122 and the second spring 123 act on the supporting element 99, maintaining the cap 58 pressed against the punch member 113 with a resulting high force.

When the seal has been formed, the supporting element 99 maintains the cap 58 in contact with the punch member 113 so that the seal, owing to the cooling system 115 and to the cooling conduit 103, undergoes initial cooling and the shape thereof stabilises. In this step, the cam device 117 ensures that only the first spring 122 acts on the supporting element 99, whilst the second spring 123 remains inactive.

When the seal has been sufficiently cooled, the cam device 117 moves the supporting element 99 away from the punch member 113. The cap 58 disengages from the punch member 113 and can be removed from the supporting element 99, to be delivered to the outlet carousel 15.

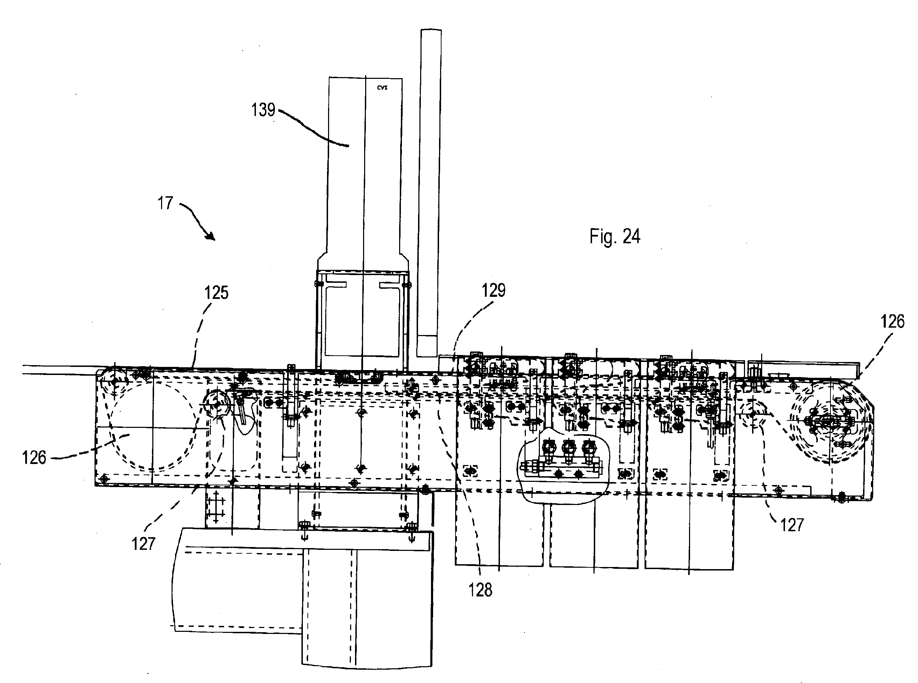

Figure 24 shows the conveying device 17 to convey the caps coming from the outlet carousel 15 away from the forming apparatus 1. The conveying device 17 comprises a conveyor belt 125 wound on a pair of end pulleys 126 and on a plurality of idler pulleys 127.

The conveying device 17 comprises a cooling device acting directly on the conveyor belt 125 for cooling the conveyor belt 125. In particular, the cooling device is shaped for acting on a lower branch 128 of the conveyor belt 125, arranged below a upper branch 129 that conveys the caps 58.

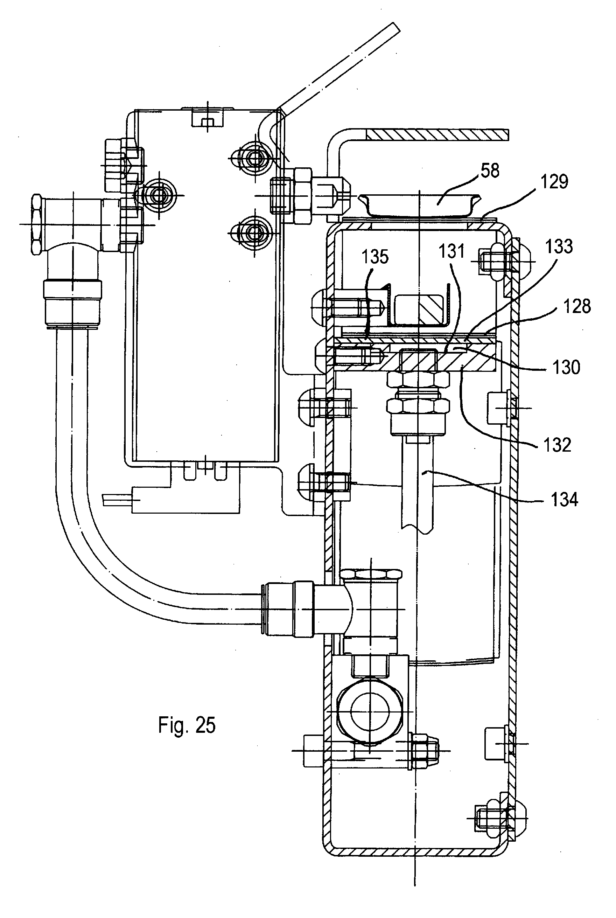

As shown in Figure 25, the cooling device comprises a cooling chamber 130 inside which a coolant circulates, for example water. The cooling chamber 130 is defined in a groove 131 obtained in a base 132. The cooling chamber 130 is closed above by a covering plate 133 that may comprise a thin metal sheet. On the covering plate 133 the lower branch 128 of the conveyor belt 125 slides.

An inlet pipe 134 takes the coolant inside the cooling chamber 130, whilst an outlet pipe that is not shown enables the coolant to exit the cooling chamber 130.

The cooling chamber 130 thus enables an upper surface 135 of the covering plate 133 to be cooled or more in general to be thermoregulated, on which the conveyor belt 125 slides. The cooling chamber 130 can be obtained in general inside a tubular structure that acts as a support for the conveyor belt 125 along the path thereof.

The conveyor belt 125 can be made of a conductive material, for example metal or plastics loaded with conductive powders. In this manner, the conveyor belt 125 can effectively exchange heat between the caps 58 resting thereupon and the cooling chamber 130.

Alternatively to the conveyor belt 125, it is possible to use a chain or another type of conveyor.

The cooling device including the cooling chamber 130 enables the caps to be cooled without using dedicated devices positioned outside the conveyor belt 125. Further, this cooling device does not penalise cycle time and is particularly efficient because it exploits the conductive properties of the conveyor belt 125 and of the covering plate 133.

The layout of the forming apparatus 1 enables one or more marking devices for marking one or more surfaces of the caps 58 to be positioned along the path of the caps 58. The marking devices may comprise laser markers.

The marking devices enable words or usable alphanumeric codes to be printed on the caps 58 that are usable for the traceability of the product or for transmitting messages to the consumers.

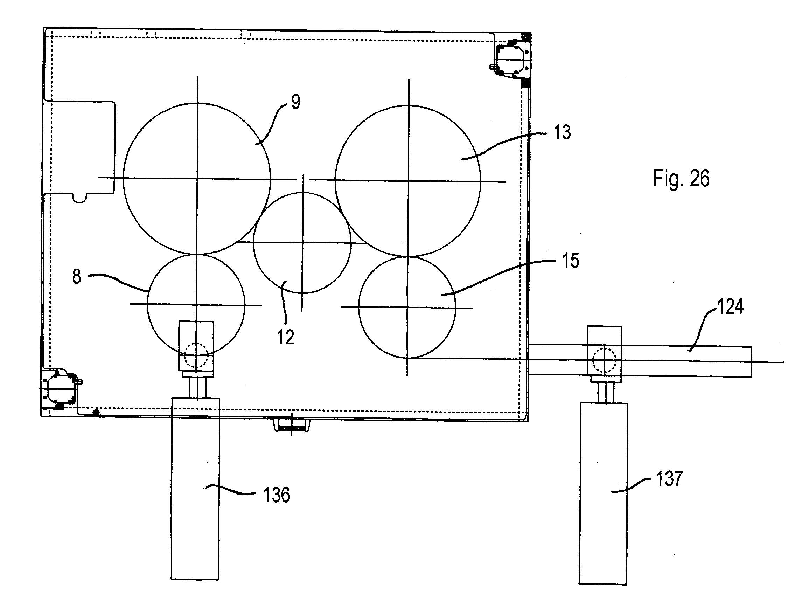

As shown in Figure 26, a marking device 136 can be positioned at the inlet carousel 8. The marking device 136 is in this case used for marking an internal surface of the cap 58, on which the seal is subsequently formed. The message created by the marking device 136 can be read either by removing the seal from the cap 58, or through the thickness of the seal, if the latter is made of a transparent material.

It is also possible to provide a further marking device 137 along the conveying device 17. The further marking device 137 enables a message to be impressed on an external surface of the cap 58, for example on the bottom.

From what has been disclosed above, it is clear that the forming apparatus 1 enables seals to be produced at high speeds and with precise control of the process parameters. This enables, for example, the weight of the obtained seals to be reduced without compromising the quality thereof in relation to other known apparatuses, enables working with a wide range of materials and the process temperatures to be reduced.

## Claims

1. Apparatus comprising:
- an extruding device (10),
- a conveying device (9) for conveying crown caps (58) along a crown caps path, said conveying device (9) comprising a dosing carousel (9) arranged in position adjacent to said extruding device (10),
- a supply line (6) of crown caps arranged for conveying a row of crown caps (58) to said conveying device (9),
- an inlet carousel (8) interposed between said supply line (6) and said conveying device (9), to receive said crown caps (58) from said supply line (6) and deliver said crown caps (58) to said conveying device (9),
- a forming unit (98) for forming a seal inside a cap (58) from a dose of plastics, said forming unit (98) comprising a supporting element (99) for **contactingly** supporting said cap (58) and a punch member (113) for shaping said dose in the cap (58) supported by said supporting element (99), said supporting element (99) comprising thermal conditioning means (102) for thermally conditioning said cap (58),
**wherein** said extruding device (10) is positioned along said crown caps path to deposit inside said crown caps (58) respective doses of plastics, **characterised in that** the apparatus further comprises temporary supporting means for supporting said cap (58) in a raised position in relation to said supporting element (99) before said dose is shaped **so as to prevent the contact between said supporting element (99) and said cap (58) before a compression moulding step.**

2. Apparatus according to claim 1, wherein said supply line (6) comprises a straight line arranged immediately upstream of said inlet carousel (8).

3. Apparatus according to claim 1 or 2, wherein said supply line (6) comprises a supply channel (7).

4. Apparatus according to any one of claims 1 to 3, wherein said inlet carousel (8) is devoid of electromagnetic induction heating devices.

5. Apparatus according to any one of claims 1 to 4, wherein said inlet carousel (8) comprises a plurality of transferring elements (43) for transferring said crown caps (58) from said supply line (6) to said dosing carousel (9), said transferring elements (43) being made of metallic material.

6. Apparatus according to any one of claims 1 to 4, and further comprising a marking device (136) positioned along said inlet carousel (8) for marking said crown caps (58).

7. Apparatus according to claim 6, wherein said marking device (136) comprises a laser marker.

8. Apparatus according to claim 6 or 7, wherein said marking device (136) is positioned so as to mark internal surfaces of said crown caps (58) to which respective seals have to be applied.

9. Apparatus according to any one of claims 1 to 8, wherein said thermal conditioning means (102) comprises cooling means (103) for cooling said cap (58).

10. Apparatus according to any one of claims 1 to 9, and further comprising surface heating means to heat a surface portion of said supporting element (99) before said dose is shaped.

11. Apparatus according to any one of claims 1 to 10, wherein said punch member (113) is cooled by a cooling system (115).

12. Apparatus according to any one of claims 1 to 11, comprising forming means (98) for shaping said dose inside said cap (58) so as to obtain a seal, said conveying device (9) having a plurality of conveying elements (51) for conveying successive caps (58) through said apparatus (1), said conveying elements (51) being at least partially made of ceramic material.

13. Apparatus according to claim 12, wherein each conveying element (51) comprises a concave member (53) having a recess for receiving said cap (58).

## Patentansprüche

1. Vorrichtung, mit:
- einer Extrudiereinrichtung (10),
- einer Fördereinrichtung (9) zum Fördern von Kronkorken (58) entlang einer Kronkorkenstrecke, wobei die Fördereinrichtung (9) ein Dosierkarussell (9) aufweist, das in einer zu der Extrudiereinrichtung (10) benachbarten Position angeordnet ist,
- einer Zuführleitung (6) von Kronkorken, die zum Fördern einer Reihe von Kronkorken (58) zu der Fördereinrichtung (9) angeordnet ist,
- einem Einlasskarussell (8), das zwischen der Zuführleitung (6) und der Fördereinrichtung (9) angeordnet ist, um die Kronkorken (58) von der Zuführleitung (6) zu empfangen und die Kronkorken (58) zu der Fördervorrichtung (9) weiterzuleiten,
- einer Bildeeinheit (98) zum Bilden einer Dichtung innerhalb eines Korkens (58) aus einer Dosis Kunststoff, wobei die Bildeeinheit (98) ein Halteelement (99) zum berührenden Halten des Korkens (58) und ein Stößelglied (113) zum Formen der Dosis in dem Korken (58) aufweist, der durch das Halteelement (99) gehalten ist, wobei das Halteelement (99) thermische Konditioniermittel (102) zum thermischen Konditionieren des Korkens (58) aufweist,
wobei die Extrudiereinrichtung (10) entlang der Kronkorkenstrecke positioniert ist, um jeweilige Dosen Kunststoff in die Kronkorken (58) abzulegen, **dadurch gekennzeichnet, dass** die Vorrichtung weiterhin temporäre Haltemittel zum Halten der Kappe (58) in einer in Bezug auf das Halteelement (99) angehobenen Position aufweist, bevor die Dosis geformt wird, um so die Berührung zwischen dem Halteelement (99) und dem Korken (58) vor einem Formpressschritt zu vermeiden.

2. Vorrichtung nach Anspruch 1, wobei die Zuführleitung (6) eine gerade Leitung aufweist, die unmittelbar stromaufwärts des Einlasskarussells (8) angeordnet ist.

3. Vorrichtung nach Anspruch 1 oder 2, wobei die Zuführleitung (6) einen Zuführkanal (7) aufweist.

4. Vorrichtung nach einem der Ansprüche 1 bis 3, wobei das Einlasskarussell (8) frei von elektromagnetischen Induktionsheizungseinrichtungen ist.

5. Vorrichtung nach einem der Ansprüche 1 bis 4, wobei das Einlasskarussell (8) eine Mehrzahl an Übertragungselementen (43) zum Übertragen der Kronkorken (58) von der Zuführleitung (6) zu dem Dosierkarussell (9) aufweist, wobei die Übertragungselemente (43) aus metallischem Material gefertigt sind.

6. Vorrichtung nach einem der Ansprüche 1 bis 4, und weiterhin mit einer Markiervorrichtung (136), die entlang des Einlasskarussells (8) zum Markieren der Kronkorken (58) positioniert ist.

7. Vorrichtung nach Anspruch 6, wobei die Markiervorrichtung (136) einen Lasermarkierer aufweist.

8. Vorrichtung nach Anspruch 6 oder 7, wobei die Markiervorrichtung (136) so positioniert ist, dass Innenoberflächen der Kronkorken (58), auf die jeweilige Dichtungen aufgebracht worden sind, markiert werden.

9. Vorrichtung nach einem der Ansprüche 1 bis 8, wobei die thermischen Konditioniermittel (102) Kühlmittel 103 zum Kühlen des Korkens (58) aufweisen.

10. Vorrichtung nach einem der Ansprüche 1 bis 9, und weiterhin mit Oberflächenheizmitteln, um einen Oberflächenabschnitt des Halteelements (99) zu erwärmen, bevor die Dosis geformt wird.

11. Vorrichtung nach einem der Ansprüche 1 bis 10, wobei das Stößelglied (113) durch ein Kühlsystem (115) gekühlt ist.

12. Vorrichtung nach einem der Ansprüche 1 bis 11, mit Bildemitteln (98) zum Formen der Dosis innerhalb des Korkens (58), um so eine Dichtung zu erhalten, wobei die Fördereinrichtung (9) eine Mehrzahl an Förderelementen (51) zum Fördern aufeinanderfolgender Korken (58) durch die Vorrichtung (1) aufweist, wobei die Förderelemente (51) zumindest teilweise aus keramischem Material gefertigt sind.

13. Vorrichtung nach Anspruch 12, wobei jedes Förderelement (51) ein konkaves Glied (53) aufweist, das eine Ausnehmung zum Aufnehmen des Korken (58) aufweist.

## Revendications

1. Appareil comprenant :
- un dispositif d'extrusion (10),
- un dispositif de transport (9) pour transporter des bouchons-couronnes (58) le long d'un trajet de bouchons-couronnes, ledit dispositif de transport (9) comprenant un carrousel de dosage (9) placé dans une position proche dudit dispositif d'extrusion (10),
- une ligne d'alimentation (6) en bouchons-couronnes organisée pour transporter une rangée de bouchons-couronnes (58) jusqu'audit dispositif de transport (9),
- un carrousel d'admission (8) interposé entre ladite ligne d'alimentation (6) et ledit dispositif de transport (9), pour recevoir lesdits bouchons-couronnes (58) en provenance de ladite ligne d'alimentation (6) et fournir lesdits bouchons-couronnes (58) audit dispositif de transport (9),
une unité de formation (98) pour former un joint étanche à l'intérieur d'un bouchon (58) à partir d'une dose de matière plastique, ladite unité de formation (98) comprenant un élément de support (99) pour porter avec contact ledit bouchon (58) et un élément à poinçon (113) pour mettre en forme ladite dose dans le bouchon (58) porté par ledit élément de support (99), ledit élément de support (99) comprenant des moyens de conditionnement thermique (102) pour faire subir un conditionnement thermique audit bouchon (58),
dans lequel ledit dispositif d'extrusion (10) est positionné le long dudit trajet des bouchons-couronnes pour déposer à l'intérieur desdits bouchons-couronnes (58) des doses respectives de matière plastique, **caractérisé en ce que** l'appareil comprend en outre des moyens de support temporaire pour porter ledit bouchon (58) dans une position dressée par rapport audit élément de support (99) avant que ladite dose soit formée, de manière à empêcher le contact entre ledit élément de support (99) et ledit bouchon (58) avant une étape de moulage par compression.

2. Appareil selon la revendication 1, dans lequel ladite ligne d'alimentation (6) comprend une ligne droite disposée immédiatement en amont dudit carrousel d'admission (8).

3. Appareil selon la revendication 1 ou 2, dans lequel ladite ligne d'alimentation (6) comprend un canal d'alimentation (7).

4. Appareil selon l'une quelconque des revendications 1 à 3, dans lequel ledit carrousel d'admission (8) est dépourvu de dispositifs de chauffage par induction électromagnétique.

5. Appareil selon l'une quelconque des revendications 1 à 4, dans lequel ledit carrousel d'admission (8) comprend une pluralité d'éléments de transfert (43) pour le transfert desdits bouchons-couronnes (58) de ladite ligne d'alimentation (6) vers ledit carrousel de dosage (9), lesdits éléments de transfert (43) étant réalisés en un matériau métallique.

6. Appareil selon l'une quelconque des revendications 1 à 4, et comprenant en outre un dispositif de marquage (136) positionné le long dudit carrousel d'admission (8) afin de marquer lesdits bouchons-couronnes (58).

7. Appareil selon la revendication 6, dans lequel ledit dispositif de marquage (136) comprend un marqueur laser.

8. Appareil selon la revendication 6 ou 7, dans lequel ledit dispositif de marquage (136) est positionné de manière à marquer des surfaces internes desdits bouchons-couronnes (58) auxquels des joints étanches respectifs doivent être appliqués.

9. Appareil selon l'une quelconque des revendications 1 à 8, dans lequel lesdits moyens de conditionnement thermique (102) comprennent des moyens de refroidissement (103) pour le refroidissement dudit bouchon (58).

10. Appareil selon l'une quelconque des revendications 1 à 9, et comprenant en outre des moyens de chauffage de surface pour chauffer une partie de la surface dudit élément de support (99) avant que ladite dose ne soit mise en forme.

11. Appareil selon l'une quelconque des revendications 1 à 10, dans lequel ledit élément à poinçon (113) est refroidi par un système de refroidissement (115).

12. Appareil selon l'une quelconque des revendications 1 à 11, comprenant des moyens de formation (98) pour la mise en forme de ladite dose à l'intérieur dudit bouchon (58) afin d'obtenir un joint étanche, ledit dispositif de transport (9) comportant une pluralité d'éléments de transport (51) pour le transport de bouchons (58) successifs à travers ledit appareil (1), lesdits éléments de transport (51) étant au moins partiellement réalisés en un matériau céramique.

13. Appareil selon la revendication 12, dans lequel chaque élément de transport (51) comprend une pièce concave (53) comportant un évidement destiné à recevoir ledit bouchon (58).
